(19)

**Europäisches Patentamt**
**European Patent Office**
**Office européen des brevets**

(11) **EP 4 550 790 A1**

(12) **EUROPEAN PATENT APPLICATION**
published in accordance with Art. 153(4) EPC

(43) Date of publication:
07.05.2025 Bulletin 2025/19

(21) Application number: 22948859.8

(22) Date of filing: 24.08.2022

(51) International Patent Classification (IPC):
$H04N\ 19/52^{(2014.01)}$     $H04N\ 19/513^{(2014.01)}$
$H04N\ 19/70^{(2014.01)}$     $H04N\ 19/105^{(2014.01)}$

(52) Cooperative Patent Classification (CPC):
H04N 19/105; H04N 19/132; H04N 19/51;
H04N 19/513; H04N 19/52; H04N 19/70

(86) International application number:
PCT/CN2022/114609

(87) International publication number:
WO 2024/000768 (04.01.2024 Gazette 2024/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.07.2022 PCT/CN2022/103418

(71) Applicant: GUANGDONG OPPO MOBILE
TELECOMMUNICATIONS
CORP., LTD.
Dongguan, Guangdong 523860 (CN)

(72) Inventors:
• SONG, Kai
  Dongguan, Guangdong 523860 (CN)
• HUO, Junyan
  Dongguan, Guangdong 523860 (CN)
• MA, Yanzhuo
  Dongguan, Guangdong 523860 (CN)
• YANG, Fuzheng
  Dongguan, Guangdong 523860 (CN)
• LI, Ming
  Dongguan, Guangdong 523860 (CN)

(74) Representative: Ipside
7-9 Allée Haussmann
33300 Bordeaux Cedex (FR)

(54) **VIDEO ENCODING METHOD AND APPARATUS, VIDEO DECODING METHOD AND APPARATUS, AND CODE STREAM, DECODER, ENCODER AND STORAGE MEDIUM**

(57) A video coding method and apparatus, a bitstream, a decoder, an encoder, and a storage medium are provided in embodiments of the disclosure. The decoding method includes the following. An initial motion information candidate list of a current block is determined, where the initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule. A motion information candidate list of the current block is determined based on ordering partial motion information candidates in the initial motion information candidate list, where the partial motion information candidates includes at least one first-type motion information candidate and $N$ second-type motion information candidates, and $N$ is a positive integer. A bitstream is decoded to determine a motion information candidate index of the current block. An inter prediction value of the current block is determined according to the motion information candidate index and the motion information candidate list of the current block. The bitstream is decoded to determine a residual value of the current block. A reconstructed value of the current block is determined according to the residual value and the inter prediction value of the current block.

FIG. 3

**Description**

CROSS-REFERENCE TO RELATED APPLICATION(S)

This application is proposed based on and claims priority to International Application No. PCT/CN2022/103418, filed July 01, 2022, the entire disclosure of which is incorporated herein by reference.

TECHNICAL FIELD

Embodiments of the disclosure relate to the field of coding, and more specifically to a video coding method and apparatus, a bitstream, a decoder, and an encoder.

BACKGROUND

A merge mode refers to an inter coding mode in which a reference picture index and a motion vector (MV) for motion vector prediction (MVP) are directly used as motion vector information of a current block. In the merge mode, a merge candidate list needs to be constructed. At an encoder side, a merge candidate in the merge candidate list is selected as an optimal merge candidate of the current block through rate-distortion optimization, and an index of the selected optimal merge candidate in the merge candidate list is encoded and signalled into a bitstream, so as to represent an MV and a reference picture index of the current block. At a decoder side, a syntax element is parsed to determine whether to use the merge mode. In the merge mode, the syntax element is further parsed to obtain the index of the optimal merge candidate of the current block in the merge candidate list, the optimal merge candidate of the current block is obtained based on the merge candidate list, and thus a prediction block of the current block can be obtained. Then, a residual block is decoded, and the residual block is transformed, quantized, and entropy encoded, etc., so that the current block can be reconstructed.

In addition, adaptive reordering of merge candidates with template matching (ARMC-TM, also referred to as ARMC) is a technology for reordering an initial merge candidate list according to template matching costs. Based on this, after construction of the merge candidate list, in the ARMC technology, merge candidates in the merge candidate list are ordered in an ascending order of template matching costs. Generally, in the ARMC technology, an order of the optimal merge candidate finally selected by the encoder side in the merge candidate list can be made as high as possible, which can improve coding efficiency of the index of the optimal merge candidate and thus improve the coding efficiency. However, with the development of technology, how to further improve coding performance with the ARMC technology is still a technical problem to be solved urgently in this field.

SUMMARY

A video coding method and apparatus, a bitstream, a decoder, an encoder, and a storage medium are provided in embodiments of the disclosure, which can further improve coding performance.

In a first aspect, a video decoding method is provided in embodiments of the disclosure. The method is applied to a decoder and includes the following. An initial motion information candidate list of a current block is determined, where the initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule. A motion information candidate list of the current block is determined based on ordering partial motion information candidates in the initial motion information candidate list, where the partial motion information candidates includes at least one first-type motion information candidate and $N$ second-type motion information candidates, and $N$ is a positive integer. A bitstream is decoded to determine a motion information candidate index of the current block. An inter prediction value of the current block is determined according to the motion information candidate index and the motion information candidate list of the current block. The bitstream is decoded to determine a residual value of the current block. A reconstructed value of the current block is determined according to the residual value and the inter prediction value of the current block.

As such, partial motion information candidates in the initial motion information candidate list of the current block that participate in the ordering not only include at least one first-type motion information candidate, but also include $N$ second-type motion information candidates. Therefore, for one thing, the following case will not occur at an encoder side: in a case where all the second-type motion information candidates in the initial motion information candidate list of the current block participate in the ordering, when a certain candidate among the second-type motion information candidates is selected as a motion information candidate of the current block, the number of bits required for a corresponding candidate index may increase. In other words, in embodiments of the disclosure, the *N* second-type motion information candidates in the initial motion information candidate list of the current block also participate in the ordering, and if a certain candidate among the second-type motion information candidates participating in the ordering is selected as the motion information candidate of the current block, since an index of the certain candidate may be small, the number of bits required for coding can be reduced and the coding efficiency can be improved. For another, the following case will not occur at a decoder side: since all the second-type motion information candidates in the initial motion information candidate list of the current block are located at the end of the list, none of the second-type motion information candidates is selected as the motion information candidate of the current block because of a high rate-distortion cost, but a reference block corresponding to a certain one of the second-type motion information candidates better matches the current block, so that the accuracy of inter prediction is reduced due to such second-type motion information candidate being unselected. In other words, in embodiments of the disclosure, the *N* second-type motion information candidates in the initial motion information candidate list of the current block also participate in the ordering, so that the second-type motion information candidate corresponding to the reference block that better matches the current block has a chance to be ordered in the front, thereby increasing the chance that the motion information candidate is selected as the motion information candidate of the current block, and increasing the probability of improving the accuracy of inter prediction, i.e., improving the decoding performance.

In a second aspect, a video encoding method is provided in embodiments of the disclosure. The method is applied to an encoder and includes the following. An initial motion information candidate list of a current block is determined, where the initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule. A motion information candidate list of the current block is determined based on ordering partial motion information candidates in the initial motion information candidate list, where the partial motion information candidates include at least one first-type motion information candidate and *N* second-type motion information candidates, and *N* is a positive integer. A motion information candidate index of the current block is determined according to the determined motion information candidate list of the current block. The motion information candidate index of the current block is encoded, and encoded bits are signalled into a bitstream.

In a third aspect, a video decoding apparatus is provided in embodiments of the disclosure. The video decoding apparatus is applied to a decoder and includes a first determining module, a first ordering module, a decoding module, a second determining module, and a third determining module. The first determining module is configured to determine an initial motion information candidate list of a current block. The initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule. The first ordering module is configured to determine a motion information candidate list of the current block based on ordering partial motion information candidates in the initial motion information candidate list. The partial motion information candidates include at least one first-type motion information candidate and *N* second-type motion information candidates, and *N* is a positive integer. The decoding module is configured to decode a bitstream to determine a motion information candidate index of the current block. The second determining module is configured to determine an inter prediction value of the current block according to the motion information candidate index and the motion information candidate list of the current block. The decoding module is further configured to decode the bitstream to determine a residual value of the current block. The third determining module is configured to determine a reconstructed value of the current block according to the residual value and the inter prediction value of the current block.

In a fourth aspect, a video encoding apparatus is provided in embodiments of the disclosure. The video encoding apparatus is applied to an encoder and includes a fourth determining module, a second ordering module, a fifth determining module, and an encoding module. The fourth determining module is configured to determine an initial motion information candidate list of a current block. The initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule. The second ordering module is configured to determine a motion information candidate list of the current block based on ordering partial motion information candidates in the initial motion information candidate list. The partial motion information candidates include at least one first-type motion information candidate and *N* second-type motion information candidates, and *N* is a positive integer. The fifth determining module is configured to determine a motion information candidate index of the current block according to the determined motion information candidate list of the current block. The encoding module is configured to encode the motion information candidate index of the current block and signal encoded bits into a bitstream.

In a fifth aspect, a decoder is provided in embodiments of the disclosure. The decoder includes a first memory and a first processor. The first memory is configured to store a computer program executable by the first processor. The first processor is configured to perform the video decoding method in embodiments of the disclosure when executing the computer program.

In a sixth aspect, an encoder is provided in embodiments of the disclosure. The encoder includes a second memory and a second processor. The second memory is configured to store a computer program executable by the second processor. The second processor is configured to perform the video encoding method in embodiments of the disclosure when executing the computer program.

In a seventh aspect, a bitstream is provided in embodiments of the disclosure. The bitstream is generated by encoding a motion information candidate index of a current block into bits. The motion information candidate index of the current block is obtained according to the video encoding method in embodiments of the disclosure.

In an eighth aspect, an electronic device is provided in embodiments of the disclosure. The electronic device includes a processor and a computer-readable storage medium. The processor is adapted to execute a computer program. The computer-readable storage medium is configured to store the computer program which, when executed by the processor, is operable to implement the video decoding method in embodiments of the disclosure or the video encoding method in embodiments of the disclosure.

In a ninth aspect, a computer-readable storage medium is provided in embodiments of the disclosure. The computer-readable storage medium is configured to store a computer program which, when executed, is operable to implement the video decoding method in embodiments of the disclosure or the video encoding method in embodiments of the disclosure.

It may be understood that, the foregoing general description and the following detailed description are merely exemplary and explanatory, and are not intended to limit the disclosure.

## BRIEF DESCRIPTION OF THE DRAWINGS

The accompanying drawings herein, which are incorporated in and constitute a part of the specification, illustrate embodiments consistent with the disclosure, and together with the specification, are intended to explain the technical solutions of the disclosure. Apparently, the accompanying drawings described below are merely some embodiments of the disclosure. Based on these drawings, those of ordinary skill in the art can also obtain other drawings without creative effort.

The flowcharts illustrated in the accompanying drawings are merely for exemplary descriptions, do not necessarily include all contents and operations/steps, and are not necessarily performed in the order illustrated. For example, some operations/steps can also be divided, and some operations/steps can be merged or partially merged. Therefore, the actual execution order may vary according to actual conditions.

FIG. 1 is a schematic block diagram of an encoding framework provided in embodiments of the disclosure.

FIG. 2 is a schematic block diagram of a decoding framework provided in embodiments of the disclosure.

FIG. 3 is a schematic diagram of a motion vector (MV) prediction process in a merge mode provided in embodiments of the disclosure.

FIG. 4 is a schematic flowchart of a method for constructing a merge candidate list provided in embodiments of the disclosure.

FIG. 5 is a schematic flowchart of a spatial merge candidate provided in embodiments of the disclosure.

FIG. 6 is a schematic diagram of a reference location provided in embodiments of the disclosure.

FIG. 7 is a schematic diagram illustrating a relationship between an MV of a collocated block and an MV of a temporal merge candidate provided in embodiments of the disclosure.

FIG. 8 is a schematic diagram of locations of non-neighbouring blocks for constructing non-neighbouring spatial merge candidates provided in embodiments of the disclosure.

FIG. 9 is a schematic diagram of a template of a current block and templates of reference blocks for a merge candidate provided in embodiments of the disclosure.

FIG. 10 is another schematic diagram of a template of a current block and templates of reference blocks for a merge candidate provided in embodiments of the disclosure.

FIG. 11 is a schematic diagram illustrating reordering of a whole merge candidate list based on template matching costs with an adaptive reordering of merge candidates with template matching (ARMC) technology provided in embodiments of the disclosure.

FIG. 12 is a schematic diagram illustrating ARMC ordering of merge candidates in a merge candidate list except zero motion vector merge candidates with an ARMC technology provided in embodiments of the disclosure.

FIG. 13 is a schematic flowchart of an ordering method provided in embodiments of the disclosure.

FIG. 14 is a schematic diagram illustrating ARMC ordering of a first merge candidate list based on a first number provided in embodiments of the disclosure.

FIG. 15 is a schematic diagram of a check process for performing redundancy check on a zero motion vector merge candidate after addition of the zero motion vector merge candidate to a first merge candidate list provided in embodiments of the disclosure.

FIG. 16 is a schematic diagram of a check process for performing redundancy check on a zero motion vector merge candidate while adding the zero motion vector merge candidate to a first merge candidate list provided in embodiments of the disclosure.

FIG. 17 is a schematic block diagram of a video encoding apparatus provided in embodiments of the disclosure.

FIG. 18 is a schematic block diagram of a video decoding apparatus provided in embodiments of the disclosure.

FIG. 19 is a schematic block diagram of a decoder provided in embodiments of the disclosure.

FIG. 20 is a schematic block diagram of an encoder provided in embodiments of the disclosure.

## DETAILED DESCRIPTION

In order to make the objectives, technical solutions, and advantages of embodiments of the disclosure clearer, specific technical solutions of the disclosure will be further described in detail below with reference to the accompanying drawings in embodiments of the disclosure. The following embodiments are used to describe the disclosure rather than limit the scope of the disclosure.

Unless otherwise defined, all technical and scientific terms used herein have the same meaning as commonly understood by those skilled in the art. The terms used herein are for the purpose of describing embodiments of the disclosure only and are not intended to limit the disclosure.

In the following description, reference to "some embodiments" "this embodiment", "embodiments of the disclosure", and examples, etc., describes a subset of all possible embodiments, but it may be understood that "some embodiments" may refer to the same or different subsets of all possible embodiments and may be combined with each other without conflict.

The following will describe technical solutions of embodiments of the disclosure with reference to the accompanying drawings.

Solutions of embodiments of the disclosure are applicable to the technical field of digital video coding, including but not limited to picture coding, video coding, hardware video coding, dedicated circuit video coding, real-time video coding, etc. In addition, the solutions of embodiments of the disclosure can be incorporated into audio video coding standards (AVS), AVS 2, or AVS 3. For example, the AVS includes, but is not limited to, H.264/audio video coding (AVC) standard, H.265/high efficiency video coding (HEVC) standard, and H.266/versatile video coding (VVC) standard. Furthermore, the solutions of embodiments of the disclosure can be used for performing lossy compression or lossless compression on a picture. The lossless compression can be visually lossless compression or mathematically lossless compression.

A block-based hybrid coding framework is used in video coding standards. Specifically, each picture of a video is partitioned into largest coding units (LCUs) or coding tree units (CTUs), which are squares of equal size (e.g., $128\times128$, $64\times64$, etc.). Each LCU or CTU can be partitioned into rectangular coding units (CUs) according to certain rules. Furthermore, the CU can also be partitioned into prediction units (PUs), transform units (TUs), etc. The hybrid coding framework can include modules such as prediction, transform, quantization, entropy coding, and loop filter. The prediction module includes intra prediction and inter prediction, and the inter prediction includes motion estimation and motion compensation. Since there is a strong correlation among neighbouring samples in a video picture, using intra prediction in video coding can eliminate spatial redundancy between neighbouring samples. The intra prediction only refers to information of a same picture to predict sample information of a current partitioned block. Moreover, since there is also a strong similarity between neighbouring pictures in the video, using inter prediction in video coding can eliminate temporal redundancy between neighbouring pictures, thereby improving coding efficiency. The inter prediction can refer to picture information of different pictures and use motion estimation to search for motion vector information that best matches the current partitioned block. For the transform, a predicted block is transformed into a frequency domain, redistributing energy. Combined with the quantization, information that is not sensitive to human eyes is removed, thereby eliminating visual redundancy. The entropy coding can eliminate character redundancy according to a current context model and probability information of a binary bitstream.

In a digital video encoding process, an encoder reads a black-and-white picture or a colour picture from an original video sequence, and then encodes the black-and-white picture or the colour picture. The black-and-white picture can include samples of luma components, and the colour picture can include samples of chroma components. Optionally, the colour picture can also include samples of luma components. A colour format of the original video sequence can be a luma-chroma (YCbCr, YUV) format or a red-green-blue (RGB) format, etc. Specifically, after the encoder reads the black-and-white picture or the colour picture, the encoder partitions the black-and-white picture or the colour picture into blocks respectively. A prediction block of a current block is generated by performing intra prediction or inter prediction on the current block. A residual block is obtained by subtracting the prediction block from an original block of the current block. A quantization coefficient matrix is obtained by performing transform and quantization on the residual block. The quantization coefficient matrix is encoded into a bitstream by entropy encoding. In a digital video decoding process, at a decoder side, the prediction block of the current block is generated by performing intra prediction or inter prediction on the current block. Moreover, the quantization coefficient matrix is obtained by decoding the bitstream, the residual block is obtained by performing inverse quantization and inverse transformation on the quantization coefficient matrix, and the reconstructed block is obtained by adding the prediction block and the residual block. The reconstructed blocks can form a reconstructed picture. A decoded picture is obtained by performing loop filtering on the reconstructed picture on a picture basis or on a block basis.

The current block can also be a current CU or a current PU.

It may be noted that similar operations for obtaining the decoded picture are also needed at an encoder side. The decoded picture can be used as a reference picture of a subsequent picture for inter prediction. Block partition information determined at the encoder side, as well as mode information or parameter information for prediction, transformation, quantization, entropy coding, loop filtering, etc., are carried in the bitstream when necessary. The decoder side parses the bitstream and analyzes existing information to determine the block partition information, as well as the mode information or the parameter information for prediction, transformation, quantization, entropy coding, loop filtering, etc. the same as such information at the encoder side, so as to ensure that the decoded picture obtained by the encoder side is the same as the decoded picture obtained by the decoder side. The decoded picture obtained by the encoder side is also referred to as "reconstructed picture". The current block can be partitioned into PUs during prediction, the current block can be partitioned into TUs during transform, and partition of PUs can be different from partition of TUs. Certainly, the above is a basic process of the video encoder and the video decoder under the block-based hybrid coding framework. With the development of technology, some modules or steps of the framework or process can be optimized. This disclosure is applicable to the basic process of the video encoder and the video decoder under the block-based hybrid coding framework.

For ease of understanding, the following will give a brief introduction to an encoding framework provided in the disclosure.

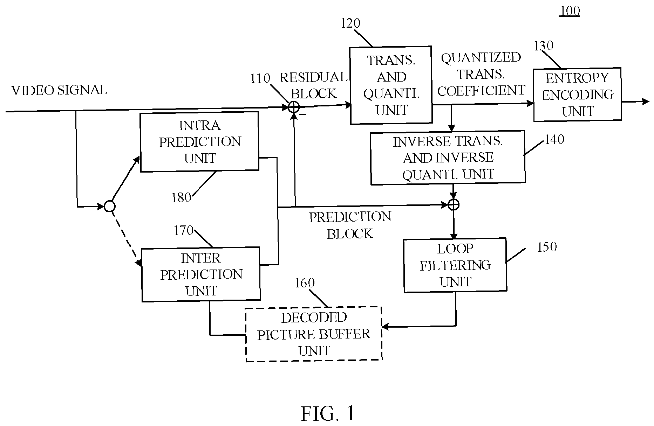

FIG. 1 is a schematic block diagram of an encoding framework 100 provided in embodiments of the disclosure.

As illustrated in FIG. 1, the encoding framework 100 can include an intra prediction unit 180, an inter prediction unit 170, a residual unit 110, a transform and quantization unit 120, an entropy encoding unit 130, an inverse transform and inverse quantization unit 140, and a loop filtering unit 150. Optionally, the encoding framework 100 can also include a decoded picture buffer unit 160. The encoding framework 100 can also be referred to as "hybrid framework encoding mode".

The intra prediction unit 180 or the inter prediction unit 170 can predict a block to-be-encoded to output a prediction block. The residual unit 110 can calculate a residual block, i.e., a difference between the prediction block and the block to-be-encoded, based on the prediction block and the block to-be-encoded. The transform and quantization unit 120 is configured to perform transform and quantization on the residual block to remove information that is not sensitive to the human eyes, thereby eliminating visual redundancy. Optionally, the residual block before being transformed and quantized by the transform and quantization unit 120 can be referred to as "temporal residual block", and a temporal residual block after being transformed and quantized by the transform and quantization unit 120 can be referred to as "frequency residual block" or "frequency-domain residual block". The entropy encoding unit 130 receives quantized transform coefficients output by the transform and quantization unit 120, and can output a bitstream based on the quantized transform coefficients. For example, the entropy encoding unit 130 can eliminate character redundancy according to a target context model and probability information of a binary bitstream. For example, the entropy encoding unit 130 is configured to implement context-based adaptive binary arithmetic coding (CABAC). The entropy encoding unit 130 is also referred to as "header information encoding unit". Optionally, in the disclosure, the block to-be-encoded can also be referred to as "original block" or "target block". The prediction block can also be referred to as "predicted block" or "picture prediction block", and can also be referred to as "prediction signal" or "prediction information". The reconstructed block can also be referred to as "reconstructed picture block" or "picture reconstruction block", and can also be referred to as "reconstructed signal" or "reconstructed information". Furthermore, for an encoder side, the block to-be-encoded can also be referred to as "encoding block" or "encoding picture block"; and for a decoder side, the to-be-decoded block can also be referred to as "decoding block" or "decoding picture block". The block to-be-encoded can be a CTU or a CU.

The encoding framework 100 calculates a residual between the prediction block and the block to-be-encoded to obtain the residual block, the residual block is transformed, quantized, etc., and then transmitted to the decoder side. Accordingly, after the decoder side receives and decodes the bitstream, the decoder side performs inverse transformation and inverse quantization to obtain the residual block, and then superimposes the residual block on the prediction block obtained through prediction by the decoder side to obtain the reconstructed block.

It may be noted that in the encoding framework 100, the inverse transform and inverse quantization unit 140, the loop filtering unit 150, and the decoded picture buffer unit 160 can be configured to form a decoder. In other words, the intra prediction unit 180 or the inter prediction unit 170 can predict the block to-be-encoded based on an existed reconstructed block, so that the encoder side uses a reference picture in the same way as the decoder side. In other words, the encoder can replicate a processing loop of the decoder and thus can generate the same prediction as the decoder side. Specifically, the quantized transform coefficients are inversely transformed and inversely quantized by the inverse transform and inverse quantization unit 140 to replicate an approximate residual block at the decoder side. The approximate residual block plus the prediction block can then be processed by the loop filtering unit 150 to smoothly filter out effects such as blocking due to block-based processing and quantization. The block output from the loop filtering unit 150 can be stored in the decoded picture buffer unit 160 for the prediction of subsequent pictures.

It may be understood that, FIG. 1 is merely an example of the disclosure and may not be construed as a limitation to the disclosure.

For example, the loop filtering unit 150 in the encoding framework 100 may include a deblocking filter (DBF) and a sample adaptive offset (SAO) filter. The DBF is configured for deblocking, and the SAO filter is configured to remove a ringing effect. In other embodiments of the disclosure, a neural network-based loop filtering algorithm can be used for the encoding framework 100 to improve video compression efficiency. Alternatively, the encoding framework 100 may be a video encoding hybrid framework based on a deep learning neural network. In an embodiment, a convolutional neural network (CNN)-based model can be used based on the DBF and the SAO filter to calculate a result after sample filtering. The loop filtering unit 150 can have the same or different network structure in a luma component and in a chroma component. Considering that the luma component contains more visual information, the luma component can also be used for guiding the filtering of the chroma component, thereby improving the reconstruction quality of the chroma component.

The following will introduce contents related to intra prediction and inter prediction.

For inter prediction, the inter prediction can refer to picture information of different pictures and use motion estimation to search for motion vector information that best matches the block to-be-encoded, so as to eliminate temporal redundancy. A picture for which inter prediction is used may include a P frame and/or a B frame, where the P frame refers to a forward prediction picture, and the B frame refers to a bidirectional prediction picture.

For intra prediction, the intra prediction only refers to information of a same picture to predict sample information of the block to-be-encoded, thereby eliminating spatial redundancy. A picture for which intra prediction is used may include an I frame. For example, according to an encoding order from the left to the right and from the top to the bottom, the block to-be-encoded can be predicted by taking a top-left block, a top block, and a left block as reference information, and the block to-be-encoded is also used as reference information of a subsequent block. In this way, the whole picture can be predicted. If an input digital video is in a colour format, such as a YUV 4:2:0 format, every 4 pixels of each picture in the digital video have 4 Y components and 2 UV components, and the encoding framework 100 can encode the Y components (i.e., luma block) and the UV components (i.e., chroma block) respectively. Similarly, the decoder side can also decode correspondingly according to the format.

For an intra prediction process, in intra prediction, prediction can be performed on the block to-be-encoded in an angular prediction mode and in a non-angular prediction mode, to obtain a prediction block. An optimal prediction mode for the block to-be-encoded is selected according to rate-distortion information calculated from the prediction block and the block to-be-encoded. The prediction mode is then transmitted to the decoder side through the bitstream. The decoder side parses out the prediction mode and performs prediction to obtain a prediction block of a target decoding block. The prediction block is superimposed with a temporal residual block transmitted through the bitstream, so as to obtain a reconstructed block.

With the development of digital video coding standards over generations, the non-angular prediction mode remains relatively stable and includes a mean mode and a planar mode. The number of angular prediction modes increases continuously with the evolution of digital video coding standards. Taking international digital video coding standard H series as an example, H.264/AVC standard only includes eight angular prediction modes and one non-angular prediction mode, H.265/HEVC is extended to include 33 angular prediction modes and two non-angular prediction modes, and in H.266/VVC, the intra prediction mode is further extended. For luma blocks, there are in total 67 traditional prediction modes and a non-traditional prediction mode, i.e., a matrix weighted intra prediction (MIP) mode. These 67 traditional prediction modes include a planar mode, a DC mode, and 65 angular prediction modes, where the planar mode is usually used for processing some blocks with gradient textures, the DC mode is usually used for processing some flat areas, and the angular prediction mode is usually used for processing blocks with obvious angular textures.

It may be noted that, in the disclosure, the current block for the intra prediction may be a square block or a rectangular block.

Further, since intra prediction blocks are all square, the probabilities of using respective angular prediction modes are equal. When the length and the width of the current block are not equal, for a horizontal block (whose width is greater than its height), top reference samples are more likely to be used than left reference samples, and for a vertical block (whose height is greater than its width), top reference samples are less likely to be used than left reference samples. When a rectangular block is predicted, the traditional angular prediction mode is changed into a wide angular prediction mode. A prediction angle range of the current block when the wide angular prediction mode is used for predicting the rectangular block is larger than a prediction angle range when the traditional angular prediction mode is used for predicting the rectangular block. Optionally, when the wide angular prediction mode is used, an index of the traditional angular prediction mode can still be used for sending a signal. Accordingly, the decoder side receives the signal and then can change the traditional angular prediction mode into the wide angular prediction mode. As such, the total number of intra prediction modes and an intra-mode encoding method remain unchanged.

Further, an intra prediction mode to-be-performed can be determined or selected based on the size of the current block. For example, the wide angular prediction mode can be determined or selected based on the size of the current block for performing intra prediction on the current block. For example, when the current block is a rectangular block (the width and the height are different), the wide angular prediction mode can be used for performing intra prediction on the current block. An aspect ratio of the current block can be used for determining an angular prediction mode to be replaced and an angular prediction mode for replacement in the wide angular prediction mode. For example, when the current block is predicted, any intra prediction mode with an angle not exceeding a diagonal angle of the current block (from the bottom-left corner to the top-right corner of the current block) can be selected as the replaced angular prediction mode.

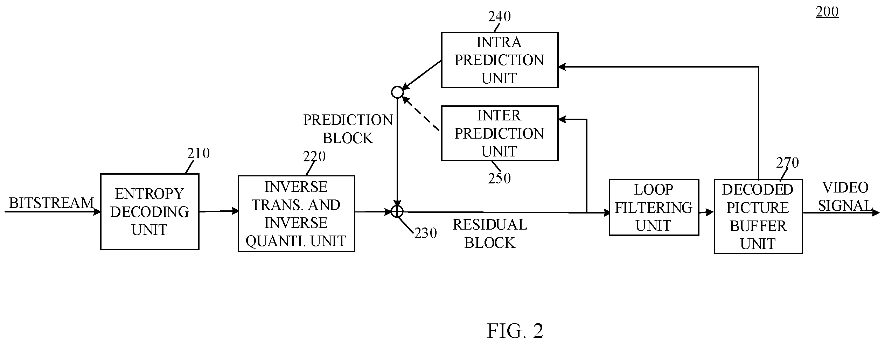

FIG. 2 is a schematic block diagram of a decoding framework 200 provided in embodiments of the disclosure.

As illustrated in FIG. 2, the decoding framework 200 can include an entropy decoding unit 210, an inverse transform and inverse quantization unit 220, a residual unit 230, an intra prediction unit 240, an inter prediction unit 250, a loop filtering unit 260, and a decoded picture buffer unit 270. The entropy decoding unit 210 receives and parses a bitstream to obtain a prediction block and a frequency-domain residual block, and the frequency-domain residual block is inversely transformed and inversely quantized by the inverse transform and inverse quantization unit 220 to obtain a temporal residual block. The residual unit 230 superimposes a prediction block obtained by the intra prediction unit 240 or the inter prediction unit 250 to the temporal residual block obtained after performing inverse transformation and inverse quantization by the inverse transform and inverse quantization unit 220, to obtain a reconstructed block.

For better understanding of the technical solutions of the disclosure, related contents will be described below.

(1) A motion vector (MV) prediction process in a merge mode

A merge mode refers to an inter coding mode in which a reference picture index and an MV for motion vector prediction (MVP) are directly used as motion vector information of a current block. In the merge mode, a merge candidate list needs to be constructed. At an encoder side, a merge candidate in the merge candidate list is selected as an optimal merge candidate of the current block through rate-distortion optimization, and an index of the selected optimal merge candidate in the merge candidate list is encoded and signalled into a bitstream, so as to represent an MV and a reference picture index of the current block. At a decoder side, a syntax element is parsed to determine whether to use the merge mode. In the merge mode, the syntax element is further parsed to obtain the index of the optimal merge candidate of the current block in the merge candidate list, the optimal merge candidate of the current block is obtained based on the merge candidate list, and thus a prediction block of the current block can be obtained. Then, a residual block is decoded, and the residual block is transformed, quantized, and entropy-encoded, etc., so that the current block can be reconstructed.

In addition, adaptive reordering of merge candidates with template matching (ARMC) is a technology for reordering an initial merge candidate list according to template matching costs. Based on this, after construction of the merge candidate list, in the ARMC technology, merge candidates in the merge candidate list are ordered in an ascending order of the template matching costs. Generally, in the ARMC technology, an order of the optimal merge candidate finally selected by the encoder side in the merge candidate list can be made as high as possible, which can improve coding efficiency of the index of the optimal merge candidate and thus improve the coding efficiency.

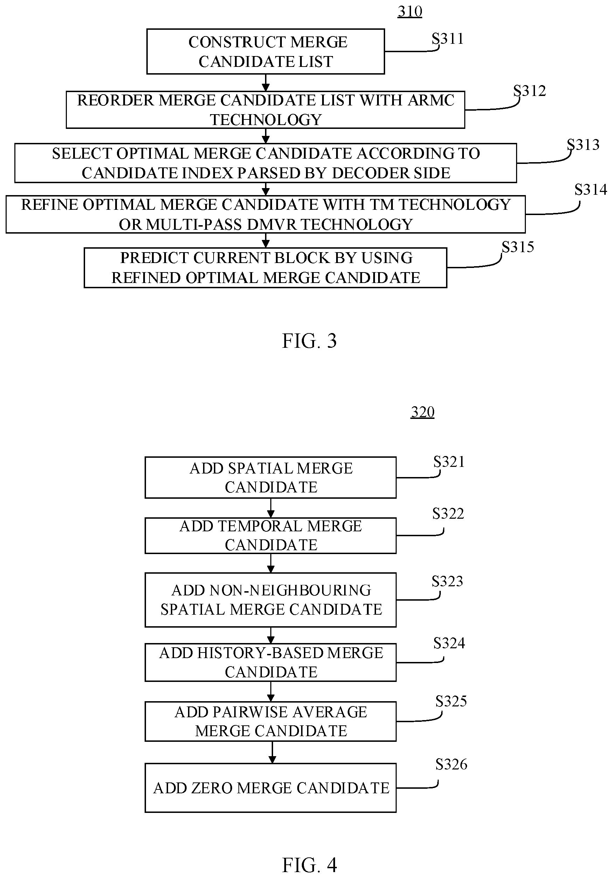

FIG. 3 is a schematic diagram of an MV prediction process 310 in a merge mode provided in embodiments of the disclosure.

As illustrated in FIG. 3, the MV prediction process 310 in the merge mode may include the following.

At S311, a merge candidate list is constructed.

Exemplarily, constructing the merge candidate list includes constructing an input to the merge candidate list and an output of the merge candidate list. For example, when a current block is a current luma coding block, the input to the merge candidate list includes: the location (xCb, yCb) of a top-left sample of the current luma coding block relative to a top-left luma sample of a current picture, the width cbWidth of the current luma coding block, and the height cbHeight of the current luma coding block, and the output of the merge candidate list includes: the merge candidate list mergeCandList and the number numOrigMergeCand of merge candidates in the merge candidate list before being filled with a zero motion vector merge candidate.

Exemplarily, the merge candidate list may include at least one of: a spatial merge candidate, a temporal merge candidate, a non-neighbouring spatial merge candidate, a history-based merge candidate, a pairwise average merge candidate, or a zero motion vector merge candidate. It may be noted that, all of the above merge candidates may participate in the construction of the merge candidate list, or only part of the merge candidates may participate in the construction of the merge candidate list, which is not limited in the disclosure.

Exemplarily, the number (quantity) of merge candidates in the merge candidate list is recorded via three parameters, namely, numCurrMergeCand, numOrigMergeCand, and MaxNumMergeCand. MaxNumMergeCand indicates the maximum number of allowed merge candidates in the merge candidate list, numCurrMergeCand indicates the number of merge candidates that are already added to the recorded list during construction of the merge candidate list, and numOrigMergeCand indicates the number of merge candidates in the merge candidate list before being filled with a zero motion vector merge candidate.

At S312, the merge candidate list is reordered with the ARMC technology.

For a current merge candidate to-be-ordered, a template matching cost of the current merge candidate can be obtained through calculation of the template matching cost, and then the current merge candidate is ordered according to the template matching cost of the current merge candidate. For example, according to template matching costs of numSortMVP merge candidates in the merge candidate list, the numSortMVP merge candidates are ordered.

At S313, an optimal merge candidate is determined according to a candidate index parsed by a decoder side.

At an encoder side, an encoder selects an optimal merge candidate from the reordered merge candidate list through rate-distortion optimization, and transmits a candidate index corresponding to the optimal merge candidate in the bitstream. At the decoder side, a decoder parses out the candidate index, i.e., merge_idx[xCb][yCb] corresponding to the optimal merge candidate transmitted in the bitstream, and selects the optimal merge candidate $N$ from the reordered merge candidate list according to the candidate index corresponding to the optimal merge candidate. For example, when the current block is a current luma coding block, (xCb, yCb) indicates a location of the current luma coding block, and $N$ = mergeCandList[ merge_idx[ xCb ][ yCb ] ].

At S314, the optimal merge candidate is refined with a template matching (TM) technology or a multi-pass decoder-side motion vector refinement (DMVR) technology.

At S315, motion compensation is performed on the current block by using the refined optimal merge candidate.

Exemplarily, a refined optimal MVP is used to find an optimal matching block in a reference picture, and a sample value of the optimal matching block is processed and then used as a prediction sample value of the current block. When motion compensation is performed on the current block by using the refined optimal merge candidate, the compensation effect can be improved. Certainly, S314 may be an optional operation. That is, the decoder side can also directly use the optimal merge candidate to perform motion compensation on the current block, without refining the optimal merge candidate. This disclosure is not limited in this regard.

(2) A method for constructing a merge candidate list

FIG. 4 is a schematic flowchart of a method 320 for constructing a merge candidate list provided in embodiments of the disclosure.

As illustrated in FIG. 4, the method 320 for constructing the merge candidate list may include the following.

At S321, a spatial merge candidate is added.

During construction of the merge candidate list, a spatial merge candidate is first added.

Exemplarily, the spatial merge candidate can be constructed according to a reference picture index and an MV of a block adjacent to the left of a current block and/or a block adjacent to the top of the current block.

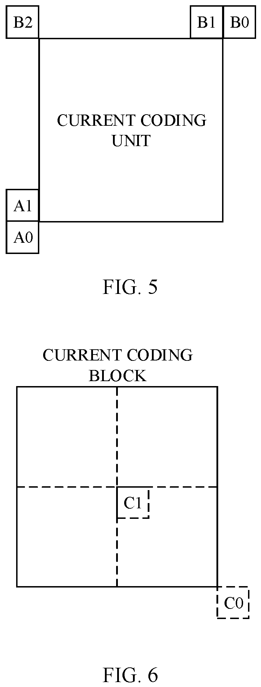

FIG. 5 is a schematic flowchart of a spatial merge candidate provided in embodiments of the disclosure.

As illustrated in FIG. 5, a block B1 represents a rightmost block right above the current block, a block A1 represents a bottommost block on the left of the current block, a block B0 represents a nearest block on the top right of the current block, a block A0 represents a nearest block on the bottom left of the current block, and a block B2 represents a nearest block on the top left of the current block. B1, A1, B0, A0, and B2 are sequentially checked and added in an order of B1→A1→B0→A0→B2, and up to four spatial merge candidates are selected for the merge candidate list. When the block B1, A1, B0, A0, or B2 is unavailable, for example, due to being in an intra coding mode or being checked as having a duplicate MV through redundancy check, the block is not added to the merge candidate list.

It may be noted that, since the block adjacent to the left of the current block and/or the block adjacent to the top of the current block are encoded or decoded blocks, the spatial merge candidate can be directly constructed based on reference picture indexes and MVs of the encoded or decoded blocks.

Exemplarily, a redundancy check method can be performed in two ways.

In a first redundancy check method, when an MV value of a spatial merge candidate is identical to an MV value of a certain merge candidate already in the merge candidate list and a reference picture index of the spatial merge candidate is identical to a reference picture index of the certain merge candidate, the spatial merge candidate is considered redundant and not added to the merge candidate list in this case. Optionally, in a regular merge mode, redundancy check is often performed in this way.

In a second redundancy check method, when a reference picture index of a spatial merge candidate is the same as a reference picture index of a certain merge candidate already in the merge candidate list and an MV of the spatial merge candidate is very close to an MV of the certain merge candidate, the spatial merge candidate is considered redundant and not added to the merge candidate list in this case. Optionally, in a TM merge mode, redundancy check is often performed in this way.

Exemplarily, when a reference picture index of a spatial merge candidate is the same as a reference picture index of a certain merge candidate already in the merge candidate list, and a difference between an MV of the spatial merge candidate and an MV of the certain merge candidate is less than and equal to a preset threshold, it is determined that the spatial merge candidate is redundant with the certain merge candidate. Optionally, the preset threshold can be set according to the number $S$ of samples in the current block. For example, when S<64, the threshold is set to 1<<4. When 64<=S<256, the threshold is set to 2<<4. When S>=256, the threshold is set to 4<<4. In the above, $x << y$ indicates that $x$ is shifted left by $y$ bits in a binary form, and specifically, a most significant bit is shifted out and an empty location of a least significant bit is filled with a zero. <= indicates being less than or equal to, < indicates being less than, and >= indicates being greater than or equal to.

Exemplarily, the spatial merge candidate may be a merge candidate with a bidirectional MV.

In a case where the spatial merge candidate includes the bidirectional MV (for example, a first MV and a second MV), when a reference picture index of the first MV of the spatial merge candidate is the same as a reference picture index of the first MV of the certain merge candidate, a reference picture index of the second MV of the spatial merge candidate is the same as a reference picture index of the second MV of the certain merge candidate, and a horizontal difference and a vertical difference between the first MV of the spatial merge candidate and the first MV of the certain merge candidate as well as a horizontal difference and a vertical difference between the second MV of the spatial merge candidate and the second MV of the certain merge candidate are all less than the preset threshold, it is determined that the spatial merge candidate is redundant with the certain merge candidate. In other words, when there is a certain merge candidate in the merge candidate list, where a horizontal difference and a vertical difference between the first MV of the certain merge candidate and the first MV of the spatial merge candidate as well as a horizontal difference and a vertical difference between the second MV of the certain merge candidate and the second MV of the spatial merge candidate are all less than the preset threshold, a reference picture index of the first MV of the certain merge candidate is the same as a reference picture index of the first MV of the spatial merge candidate, and a reference picture index of the second MV of the certain merge candidate is the same as a reference picture index of the second MV of the spatial merge candidate, it can be determined that the spatial merge candidate is redundant with the certain merge candidate.

Exemplarily, the spatial merge candidate may be a merge candidate with the first MV (or the second MV).

In a case where the spatial merge candidate includes the first MV (or the second MV), when the reference picture index of the first MV (or the second MV) of the spatial merge candidate is the same as the reference picture index of the first MV (or the second MV) of the certain merge candidate, and the horizontal difference and the vertical difference between the first MV (or the second MV) of the spatial merge candidate and the first MV (or the second MV) of the certain merge candidate are both less than the preset threshold, it is determined that the spatial merge candidate is redundant with the certain merge candidate. In other words, when there is a certain merge candidate in the merge candidate list, where a horizontal difference and a vertical difference between the first MV (or the second MV) of the certain merge candidate and the first MV (or the second MV) of the spatial merge candidate are both less than the preset threshold, and a reference picture index of the first MV (or the second MV) of the certain merge candidate is the same as a reference picture index of the first MV (or the second MV) of the spatial merge candidate, it can be determined that the spatial merge candidate is redundant with the certain merge candidate.

Exemplarily, after the check and addition of the spatial merge candidate, the value of numCurrMergeCand may be further recorded and updated, and the value of numOrigMergeCand may also be updated.

At S322, a temporal merge candidate is added.

After addition of the spatial merge candidate, a temporal merge candidate is selected and added to the merge candidate list. Exemplarily, after the check and addition of the spatial merge candidate, the value of numCurrMergeCand may be further recorded and updated, and the value of numOrigMergeCand may also be updated. If numCurrMergeCand is less than MaxNumMergeCand, the temporal merge candidate may be further added.

Exemplarily, a preset number of temporal merge candidates may be added to the merge candidate list.

Exemplarily, during addition of the temporal merge candidate, redundancy check is needed for the temporal merge candidate with candidates already in the merge candidate list. A specific check method for the temporal merge candidate may be the same as or different from the redundancy check method for the spatial merge candidate, which will not be repeated herein.

Exemplarily, after the check and addition of the temporal merge candidate, the value of numCurrMergeCand is recorded and updated, and the value of numOrigMergeCand may also be updated.

Exemplarily, the temporal merge candidate may be obtained or derived from the perspective of input and output.

Input: information of the current block.

For example, when the current block is a luma coding block, the input may further include the location (xCb, yCb) of the luma coding block, the width cbWidth of the luma coding block, the height cbHeight of the luma coding block, and a reference picture index refIdxLXCol, where *X* is 0 or 1.

Output: the temporal merge candidate.

A reference picture index of the temporal merge candidate is the input reference picture index.

It may be noted that, during addition of the temporal merge candidate, the merge candidate list without the temporal merge candidate may also be input, and the merge candidate list with the temporal merge candidate may be output. That is, the temporal merge candidate can be added from the perspective of input and output. The input merge candidate list may include: reference picture indexes refIdxL0N (an index of a reference picture L0) and refIdxL1N (an index of a reference picture L1) corresponding to each merge candidate in the merge candidate list, prediction list utilization flags predFlagL0N (indicating whether to use the reference picture L0) and predFlagL1N (indicating whether to use the reference picture L1) corresponding to each merge candidate, motion vectors mvL0N (an MV of the merge candidate relative to a reference block in the reference picture L0) and mvL1N (an MV of the merge candidate relative to a reference block in the reference picture L1) corresponding to each merge candidate, and the number numCurrMergeCand of merge candidates in the input merge candidate list.

Exemplarily, an MV of the temporal merge candidate may be constructed according to an MV of a collocated block in a collocated picture of a current picture.

The collocated picture of the current picture may be an encoded picture neighbouring to the current picture in the time domain. Optionally, the collocated picture of the current picture or the encoded picture neighbouring to the current picture in the time domain may be indicated by a syntax element collocated_ref_idx of header information of the current picture. Accordingly, the collocated block may be a block in the collocated picture that corresponds to a reference location of the current block. For example, the collocated block may be a block in the collocated picture at the reference location of the current block.

FIG. 6 is a schematic diagram of a reference location provided in embodiments of the disclosure.

As illustrated in FIG. 6, if a block at location C0 in the collocated picture of the current picture is unavailable or a coding mode for the block at location C0 does not satisfy the requirements, a block at location C1 in the collocated picture of the current picture is determined as the collocated block.

It may be understood that, a method for adding the temporal merge candidate is not limited in the disclosure. For example, locations C0 and C1 in FIG. 6 are merely examples of the disclosure and may not be construed as a limitation to the disclosure. For example, in other alternative embodiments, the reference location may include another location or multiple locations. Accordingly, during addition of the temporal merge candidate, the temporal merge candidate may be added by using motion vector information (i.e., merge candidates) at several preset locations, or the temporal merge candidate may be added by ordering motion vector information within a preset candidate range according to template matching costs and selecting several motion vector information with low template matching costs. Alternatively, instead of ordering, the temporal merge candidate may be added by first comparing the template matching costs of the motion vector information within the preset candidate range, and directly selecting several motion vector information with the minimum template matching cost, the second-minimum template matching cost, etc.

Since a time interval between the current picture and a reference picture of the current picture is usually different from a time interval between the collocated picture and a reference picture of the collocated picture, the MV of the collocated block cannot be directly used for the temporal merge candidate, and a corresponding scaling adjustment according to a location relationship with the reference picture is needed.

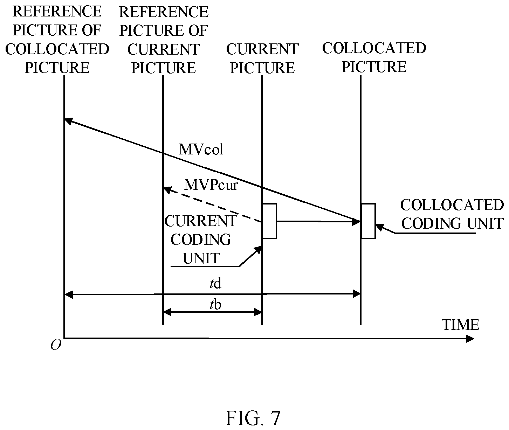

FIG. 7 is a schematic diagram illustrating a relationship between an MV of a collocated block and an MV of a temporal merge candidate provided in embodiments of the disclosure.

As illustrated in FIG. 7, it is assumed that the time interval between the current picture and the reference picture of the current picture is tb and the time interval between the collocated picture and the reference picture of the collocated picture is td. For example, tb and td may be both picture order count (POC) differences. In this case, a temporal merge candidate of the current block is calculated as follows.

$$\mathrm{MVP}_{\mathrm{cur}} = \frac{t_{\mathrm{b}}}{t_{\mathrm{d}}} \times \mathrm{MV}_{\mathrm{col}}$$

In the above, $\mathrm{MV}_{\mathrm{col}}$ is the MV of the collocated block, and $\mathrm{MVP}_{\mathrm{cur}}$ indicates the MV of the temporal merge candidate of the current block.

Exemplarily, when a current picture where the current block is located is a P frame, a unidirectional prediction temporal merge candidate can be constructed and added to the merge candidate list. When the current picture is a B frame, a bidirectional prediction temporal merge candidate is constructed and added to the merge candidate list. It may be noted that, the unidirectional prediction temporal merge candidate includes the first MV (or the second MV), and the bidirectional prediction temporal merge candidate may include the bidirectional MV. For an MV derivation method for the first MV (or the second MV) and the bidirectional MV in each direction, reference can be made to the above derivation method for the MV of the temporal merge candidate, which will not be repeated herein.

At S323, a non-neighbouring spatial merge candidate is added.

Exemplarily, after the check and addition of the temporal merge candidate, the value of numCurrMergeCand is recorded and updated, and the value of numOrigMergeCand may also be updated. If numCurrMergeCand is less than MaxNumMergeCand, the non-neighbouring spatial merge candidate may be further added. Only motion information (i.e., an MV and a reference picture index) of a neighbouring block of the current block is used for the spatial merge candidate, and motion information (i.e., an MV and a reference picture index) of a representative non-neighbouring block at a location around the current block can be used for the non-neighbouring spatial merge candidate.

Exemplarily, a preset number of non-neighbouring spatial merge candidates may be added to the merge candidate list.

Exemplarily, during addition of the non-neighbouring spatial merge candidate, redundancy check is needed for the non-neighbouring spatial merge candidate with candidates already in the merge candidate list. A specific check method for the non-neighbouring spatial merge candidate may be the same as or different from the redundancy check method for the spatial merge candidate, which will not be repeated herein.

Exemplarily, after the check and addition of the non-neighbouring spatial merge candidate, the value of numCurrMergeCand is recorded and updated, and the value of numOrigMergeCand may also be updated.

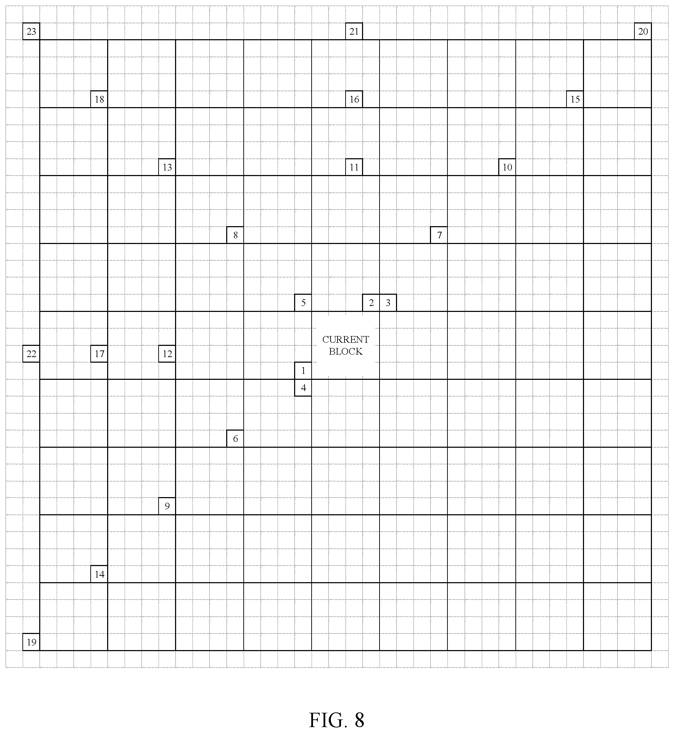

FIG. 8 is a schematic diagram of locations of non-neighbouring blocks for constructing non-neighbouring spatial merge candidates provided in embodiments of the disclosure.

As illustrated in FIG. 8, neighbouring blocks for constructing spatial merge candidates may include blocks at location 1 to location 5, and the non-neighbouring blocks for constructing the non-neighbouring spatial merge candidates may include blocks at location 6 to location 23.

It may be understood that, a method for adding the non-neighbouring spatial merge candidate is not limited in the disclosure. For example, location 1 to location 23 in FIG. 8 are merely examples of the disclosure and may not be construed as a limitation to the disclosure. For example, in other alternative embodiments, the locations of the non-neighbouring blocks for constructing the non-neighbouring spatial merge candidates may include other locations. Accordingly, during addition of the non-neighbouring spatial merge candidate, the non-neighbouring spatial merge candidate may be added by using motion vector information at several preset locations, or the non-neighbouring spatial merge candidate may be added by ordering motion vector information within a preset candidate range according to template matching costs and selecting several motion vector information with low template matching costs. Alternatively, instead of ordering, the non-neighbouring spatial merge candidate may be added by first comparing the template matching costs of the motion vector information within the preset candidate range, and directly selecting several motion vector information with the minimum template matching cost, the second-minimum template matching cost, etc.

At S324, a history-based merge candidate is added.

Exemplarily, after the check and addition of the non-neighbouring spatial merge candidate, the value of numOrigMergeCand is updated while the value of numCurrMergeCand is recorded and updated. If numCurrMergeCand is less than MaxNumMergeCand, the history-based merge candidate may be further added.

Exemplarily, the history-based merge candidate means that motion information (i.e., an MV and a reference picture index) of a previously-coded block is stored in a list of a specified maximum length to construct a history-based merge candidate list. The history-based merge candidate list is continuously updated in the coding process. After each block using inter coding is encoded or decoded, motion information (i.e., an MV and a reference picture index) of the block is added as a new candidate to the end of the history-based merge candidate list. Then, redundancy check is performed on candidates already in the history-based merge candidate list. If the newly-added candidate and a candidate already in the list are duplicate, the candidate already in the history-based merge candidate list is removed. Finally, the maximum length of the history-based merge candidate list is maintained according to the first-in-first-out principle. That is, if the number of candidates in the history-based merge candidate list after the new candidate is added is greater than the maximum length, then the front-most candidate is removed. A life cycle of the history-based merge candidate list is each CTU row, that is, the history-based merge candidate list is cleared every time a new CTU row is reached.

Based on this, after the check and addition of the non-neighbouring spatial merge candidate, if there is still a vacant location in the merge candidate list, then the candidates in the history-based merge candidate list are checked one by one through redundancy check from the end (newest) to the start, and a non-redundant candidate is added to a subsequent vacant location in the merge candidate list until options in the history-based merge candidate list are exhausted or the merge candidate list is full.

Exemplarily, after the check and addition of the non-neighbouring spatial merge candidate, the value of numCurrMergeCand is recorded and updated, and the value of numOrigMergeCand may also be updated.

At S325, a pairwise average merge candidate is added.

Exemplarily, after the check and addition of the history-based merge candidate, the value of numOrigMergeCand may also be updated while the value of numCurrMergeCand is recorded and updated. If numCurrMergeCand is less than MaxNumMergeCand, the pairwise average merge candidate may be further added. That is, after the check and addition of the non-neighbouring spatial merge candidate, if there is still a vacant location in the merge candidate list, the pairwise average merge candidate may be further used to supplement the merge candidate list.

Exemplarily, during addition of the pairwise average merge candidate, redundancy check is needed for the pairwise average merge candidate with candidates already in the merge candidate list. A specific check method for the pairwise average merge candidate may be the same as or different from the redundancy check method for the spatial merge candidate, which will not be repeated herein.

Exemplarily, the pairwise average merge candidate is obtained based on the first two candidates in the merge candidate list.

If Cand0 and Cand1 both exist, an MV of the pairwise average merge candidate may be calculated as:

$$mvAvgLX = \left(mvCand0LX + mvCand1LX + (1,1)\right) >> 1,$$

where mvAvgLX indicates the pairwise average merge candidate, LX indicates the reference picture index, $X$ is 0 or 1, mvCand0LX is an MV of a first merge candidate with the reference picture index LX in the merge candidate list, mvCand1LX is an MV of a second merge candidate with the reference picture index LX in the merge candidate list, + indicates a vector addition operation, and >> indicates a right shift operation.

If only Cand0 exists, the MV of the pairwise average merge candidate may be calculated as follows.

$$mvAvgLX = mvCand0LX$$

If only Cand1 exists, the MV of the pairwise average merge candidate may be calculated as follows.

$$mvAvgLX = mvCand1LX$$

Exemplarily, when a current picture where the current block is located is a P frame, a unidirectional prediction average merge candidate is constructed. When the current picture is a B frame, a bidirectional prediction average merge candidate is constructed. It may be noted that, the unidirectional prediction average merge candidate includes the first MV (or the second MV), and the bidirectional prediction average merge candidate may include the bidirectional MV. For an MV derivation method for the first MV (or the second MV) and the bidirectional MV in each direction, reference can be made to the above derivation method for the MV of the average merge candidate, which will not be repeated herein.

Exemplarily, after the check and addition of the average merge candidate, the value of numCurrMergeCand is recorded and updated, and the value of numOrigMergeCand may be also updated. In this case, a final value of numOrigMergeCand can be obtained, which records the number of merge candidates in the merge candidate list before being filled with a zero motion vector merge candidate.

At S326, a zero motion vector merge candidate is added.

Exemplarily, after the check and addition of the average merge candidate, the value of numCurrMergeCand is recorded and updated, and the value of numOrigMergeCand may be also updated. If numCurrMergeCand is still less than MaxNumMergeCand, the zero motion vector merge candidate may be further added.

Exemplarily, the zero motion vector merge candidate may be added from the perspective of input and output.

Input: the merge candidate list, reference picture indexes refIdxL0N (an index of a reference picture L0) and refIdxL1N (an index of a reference picture L1) corresponding to each merge candidate in the merge candidate list, prediction list utilization flags predFlagL0N (indicating whether to use the reference picture L0) and predFlagL1N (indicating whether to use the reference picture L1) corresponding to each merge candidate, motion vectors mvL0N (an MV of the merge candidate relative to a reference block in the reference picture L0) and mvL1N (an MV of the merge candidate relative to a reference block in the reference picture L1) corresponding to each merge candidate, and the number numCurrMergeCand of merge candidates in the merge candidate list.

Output: the merge candidate list, the number numCurrMergeCand of merge candidates in the merge candidate list, reference picture indexes refIdxL0zeroCandm (the index of the reference picture L0) and refIdxL1zeroCandm (the index of the reference picture L1) corresponding to each zero motion vector merge candidate that is newly added to the merge candidate list, prediction list utilization flags predFlagL0zeroCandm (indicating whether to use the reference picture L0) and predFlagL1zeroCandm (indicating whether to use the reference picture L1) corresponding to each zero motion vector merge candidate, and motion vectors mvL0zeroCandm (an MV of the zero motion vector merge candidate relative to the reference block in the reference picture L0) and mvL1zeroCandm (an MV of the zero motion vector merge candidate relative to the reference block in the reference picture L0) corresponding to each zero motion vector merge candidate.

Exemplarily, if numCurrMergeCand is less than MaxNumMergeCand, a unidirectional or bidirectional zero motion vector merge candidate with value (0,0) is filled in the merge candidate list. A reference picture index corresponding to the first zero motion vector merge candidate is 0, and then zero motion vector merge candidates are constructed according to respective reference pictures corresponding to L0 or L1 in an ascending order of the reference picture index until the number of merge candidates in the merge candidate list reaches a specified number. After proceeding to the maximum index in the ascending order of the reference picture index, when the number of merge candidates in the merge candidate list does not reach the specified number, reference picture indexes of subsequently-added zero motion vector merge candidates are all 0 or restart from 0 to the maximum index in the ascending order.

It may be noted that, redundancy check is not performed during addition of the zero motion vector merge candidate, so as to make the number of candidates filled in the merge candidate list reach MaxNumMergeCand. The number of the filled zero motion vector merge candidates numZeroMergeCand is equal to numCurrMergeCand-numOrigMergeCand.

(3) Reordering the merge candidate list with the ARMC technology

In the ARMC technology, merge candidates in the merge candidate list are reordered based on template matching costs. The ARMC technology is applied to a regular merge mode, an affine merge mode, or a TM merge mode. For the TM merge mode, ARMC may be performed before the TM refinement of the candidates.

After construction of the merge candidate list, the merge candidates in the merge candidate list can be divided into several subgroups during reordering of the merge candidate list with the ARMC technology. For example, the size of the subgroup is set to 5 for the regular merge mode and the TM merge mode, and the size of the subgroup is set to 3 for the affine merge mode. Merge candidates in each subgroup are ordered in an ascending order of template matching costs. The template matching cost is a sum of absolute differences (SAD) between a template of a current block and a template of a reference block for the merge candidate. Certainly, the matching cost is not limited to the SAD. In order to improve the matching accuracy, the sum of absolute transformed differences (SATD), the sum of squares for error (SSE), the mean square error (MSE), or other more complex costs can also be used, which is not limited in the disclosure.

Exemplarily, the template of the current block includes reconstructed samples in a top row and a left column of the current block.

Exemplarily, when bidirectional prediction is used for the merge candidate, the template of the reference block for the merge candidate is also found through bidirectional prediction.

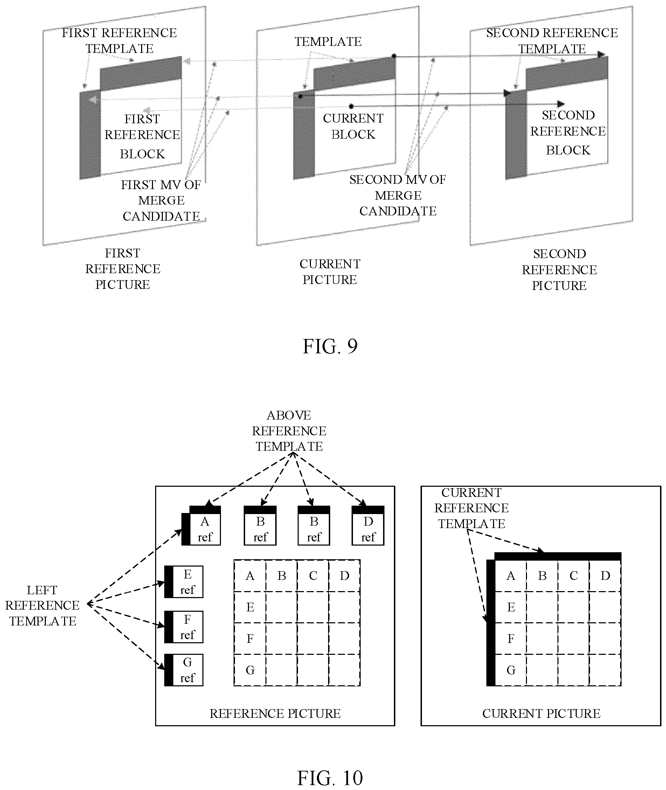

FIG. 9 is a schematic diagram of a template of a current block and templates of reference blocks for a merge candidate provided in embodiments of the disclosure.

As illustrated in FIG. 9, the template of the current block includes reconstructed samples in a top row and a left column of the current block. When bidirectional prediction is used for the merge candidate, a first reference block template includes reconstructed samples in a top row and a left column of a first reference block in a first reference picture, and a second reference block template includes reconstructed samples in a top row and a left column of a second reference block in a second reference picture. During calculation of a template matching cost of the merge candidate, the first reference block template and the second reference block template may be averaged, and then an SAD may be calculated based on the obtained average and the template of the current block, and the obtained SAD is determined as the template matching cost of the merge candidate.

Exemplarily, for each subblock-based merge candidate with a subblock size equal to Wsub×Hsub, the template of the reference block for the merge candidate may include an above reference template and a left reference template. The above reference template includes templates of Wsub×1 reference subblocks, and the left reference template includes templates of 1×Hsub reference subblocks.

FIG. 10 is another schematic diagram of a template of a current block and templates of reference blocks for a merge candidate provided in embodiments of the disclosure.

As illustrated in FIG. 10, the template of the current block includes reconstructed samples in a top row and a left column of the current block. For each subblock-based merge candidate with a subblock size equal to 4×4, the template of the reference block for the merge candidate may include an above reference template and a left reference template. The above reference template includes templates of 4×1 reference subblocks, and the left reference template includes templates of 1×4 reference subblocks. The templates of 4×1 reference subblocks include a reference subblock of subblock A (i.e., A ref), a reference subblock of subblock B (i.e., B ref), a reference subblock of subblock C (i.e., C ref), and a reference subblock of subblock D (i.e., D ref). The templates of 1×4 reference subblocks include the reference subblock of subblock A (i.e., A ref), a reference subblock of subblock E (i.e., E ref), a reference subblock of subblock F (i.e., F ref), and a reference subblock of subblock G (i.e., G ref). For example, the above reference template is a template obtained by splicing the above templates of 4×1 reference subblocks, and the left reference template is a template obtained by splicing the left templates of 1×4 reference subblocks. Based on this, after the template of the reference block is obtained through splicing, an SAD between the template of the reference block and the template of the current block may be calculated, and the SAD is determined as the template matching cost of the merge candidate.

Certainly, in other alternative embodiments, the template matching cost of the merge candidate may also be calculated in other manners, which is not limited in the disclosure.

It may be noted that, in other alternative embodiments, the ARMC technology can also be extended to a combined inter and intra prediction (CIIP) mode, a bilateral matching (BM) merge mode, and an intra block copy (IBC) mode, which is not limited in the disclosure.

The following will give an exemplary illustration of a derivation algorithm related to ARMC.

1. A derivation algorithm for the number of candidates participating in the ARMC ordering

Exemplarily, the derivation algorithm for the number numSortMVP of candidates participating in the ARMC ordering can be implemented as follows.

Input: the number numOrigMergeCand of merge candidates in the merge candidate list before being filled with a zero motion vector merge candidate.

Output: the number numSortMVP of merge candidates participating in the ARMC ordering.

The value of numSortMVP is set equal to numOrigMergeCand that is output during construction of the merge candidate list, which records the number of merge candidates in the merge candidate list before being filled with a zero motion vector merge candidate.

2. A derivation algorithm for the reordered merge candidate list

Exemplarily, the derivation algorithm for the reordered merge candidate list can be implemented as follows.

Input to an ARMC module: information of the current block, the merge candidate list before the ordering, and the number numOrigMergeCand of merge candidates in the merge candidate list before being filled with a zero motion vector merge candidate.

For example, when the current block is a current luma coding block, the input to the ARMC module may include: the location (xCb, yCb) of the current luma coding block, the width cbWidth of the luma coding block, and the height cbHeight of the luma coding block.

Output of the ARMC module: the reordered merge candidate list mergeCandList.

3. A derivation algorithm for the reordered merge candidate list

Exemplarily, the derivation algorithm for the reordered merge candidate list can be implemented as follows.

Input to an ARMC module: information of the current block, the merge candidate list before the ordering, and the number numSortMVP of merge candidates participating in the ARMC ordering.

For example, when the current block is a current luma coding block, the input to the ARMC module may include: the location (xCb, yCb) of the current luma coding block, the width cbWidth of the luma coding block, and the height cbHeight of the luma coding block.

Output of the ARMC module: the reordered merge candidate list mergeCandList.

It may be noted that, different values may be assigned to numSortMVP in different scenarios. If all the merge candidates are ordered, numSortMVP is set equal to MaxNumMergeCand. If only merge candidates in the merge candidate list before being filled with a zero motion vector merge candidate are ordered, numSortMVP is set equal to numOrigMergCand. If a specified number of merge candidates in the merge candidate list are ordered, numSortMVP may be set to another preset value. Embodiments of the disclosure are not limited in this regard.

That is, in an implementation, the number of candidates participating in the ARMC ordering can be determined based on the derivation algorithm for the number of candidates participating in the ARMC ordering, and then the reordered merge candidate list is derived based on the derivation algorithm for the reordered merge candidate list. In another implementation, the derivation of the number numSortMVP of candidates participating in the ARMC ordering may also be weakened or used as an optional operation, that is, the reordered merge candidate list may be derived. In this case, the number numSortMVP of merge candidates participating in the ARMC ordering can be used as an input parameter, and can be directly set equal to numOrigMergCand or another corresponding value.

4. A derivation algorithm for a template matching cost of a current merge candidate

Exemplarily, the derivation algorithm for the template matching cost of the current merge candidate can be implemented as follows.

Input: information of the current block and the current merge candidate.

For example, when the current block is a current luma coding block, the input to the ARMC module may include: the location (xCb, yCb) of the current luma coding block, the width cbWidth of the luma coding block, and the height cbHeight of the luma coding block.

Output: the template matching cost of the current merge candidate.

In a specific implementation, a preset area on the top and the left of the current block can be taken as a template of the current block. According to an MV and a reference picture index indicated by the current merge candidate, a template of a reference block is determined based on xCb, yCb. Then, a template matching cost, for example, the SAD between the template of the reference block and the template of the current block is calculated. In order to improve the matching accuracy, the SATD, the SSE, the MSE, or other more complex costs can also be used, and the calculated template matching cost of the current merge candidate is returned.

(4) Improvements to the ARMC technology in embodiments of the disclosure

In order to ensure the construction effect of the merge candidate list, the ARMC technology can be extended to the construction process of the merge candidate list. Before addition of temporal merge candidates, several candidates with low template matching costs can be selected from multiple temporal merge candidates by using the ARMC technology and then added to the merge candidate list. Similarly, before addition of non-neighbouring spatial merge candidates, several candidates with low template matching costs can also be selected from multiple non-neighbouring temporal merge candidates by using the ARMC technology and then added to the merge candidate list.

In addition, after the merge candidate list is constructed, during reordering of the merge candidate list with the ARMC technology, a grouping idea may be abandoned, and the whole merge candidate list is directly ordered, so as to obtain a merge candidate list that is subjected to the ARMC ordering.

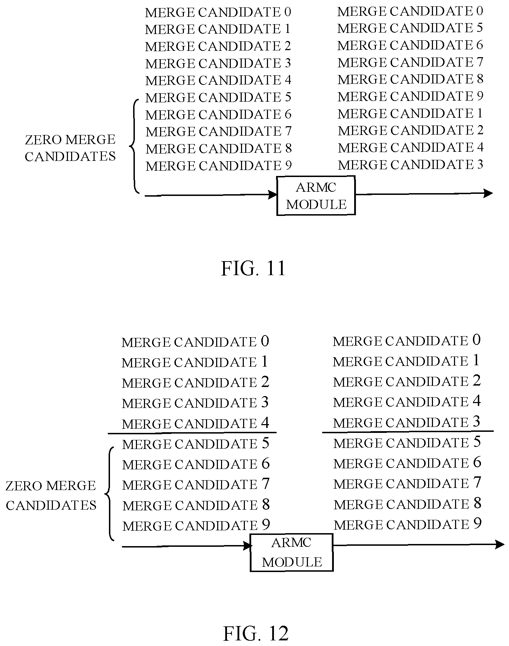

FIG. 11 is a schematic diagram illustrating reordering of a whole merge candidate list based on template matching costs with an ARMC technology provided in embodiments of the disclosure.

As illustrated in FIG. 11, it is assumed that the merge candidate list sequentially includes merge candidate 0 to merge candidate 9, where merge candidate 0 to merge candidate 4 are merge candidates added before addition of a zero motion vector merge candidate, and merge candidate 5 to merge candidate 9 are last added zero motion vector merge candidates. If the whole merge candidate list is directly ordered, the merge candidate list that is subjected to the ARMC ordering includes merge candidate 0, merge candidate 5 to merge candidate 9, merge candidate 1, merge candidate 2, merge candidate 4, and merge candidate 3, sequentially.

However, since the end of the merge candidate list is filled with the zero motion vector merge candidates, after the ARMC ordering of the whole merge candidate list using the ARMC technology, the multiple zero motion vector merge candidates may be ordered at the front of the list. However, ordering the multiple zero motion vector merge candidates at the front of the list may affect the coding efficiency of a candidate index of an optimal merge candidate. In view of this, this disclosure considers that the zero motion vector merge candidates filled at the end of the merge candidate list may not participate in the ARMC ordering, that is, the ARMC ordering is performed on only merge candidates except the zero motion vector merge candidates in the merge candidate list. As such, the multiple zero motion vector merge candidates will not be ordered at the front of the reordered list, thereby reducing the impact on the coding efficiency of the candidate index of the optimal merge candidate. In addition, template acquisition and calculation will not be performed on the last filled zero motion vector merge candidates, thereby reducing the calculation complexity of the ARMC technology.

FIG. 12 is a schematic diagram illustrating ARMC ordering of merge candidates in a merge candidate list except zero motion vector merge candidates with an ARMC technology provided in embodiments of the disclosure.

As illustrated in FIG. 12, it is assumed that the merge candidate list sequentially includes merge candidate 0 to merge candidate 9, where merge candidate 0 to merge candidate 4 are merge candidates added before addition of a zero motion vector merge candidate, and merge candidate 5 to merge candidate 9 are last added zero motion vector merge candidates. If the ARMC ordering is performed on only merge candidate 0 to merge candidate 4 in the merge candidate list, the merge candidate list that is subjected to the ARMC ordering includes merge candidate 0, merge candidate 1, merge candidate 2, merge candidate 4, merge candidate 3, and merge candidate 5 to merge candidate 9, sequentially.

However, for the ARMC ordering of only the merge candidates except the zero motion vector merge candidates in the merge candidate list, there are still the following technical problems.

1. During construction of the merge candidate list, if merge candidates that are added to the merge candidate list before filling of a zero motion vector merge candidate do not include any zero motion vector merge candidate, then after the ARMC ordering is performed in this way, the zero motion vector merge candidate does not participate in the ARMC ordering. If an encoder selects the zero motion vector merge candidate as an optimal MVP based on the merge candidate list that is subjected to the ARMC ordering, then the number of bits required for encoding a candidate index corresponding to the optimal merge candidate will increase, so that the encoding performance will be reduced.

2. If a reference block corresponding to a zero motion vector merge candidate better matches a current block, but the zero motion vector merge candidate is not selected as the optimal MVP because the zero motion vector merge candidate filled in the merge candidate list does not participate in the ARMC ordering, i.e., the zero motion vector merge candidate may be located at the end of the merge candidate list that is subjected to the ARMC ordering, then the prediction accuracy of an MV of the current block is reduced, and thus a deviation between an original value and a prediction value of the current block may be relatively large, so that the encoding performance will be reduced.

In view of this, a video encoding method and a video decoding method are provided in embodiments of the disclosure. The video encoding method includes operations at 101 to 104 below.

At 101, an encoder determines an initial motion information candidate list of a current block. The initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule.

At 102, the encoder determines a motion information candidate list of the current block based on ordering partial motion information candidates in the initial motion information candidate list. The partial motion information candidates include at least one first-type motion information candidate and $N$ second-type motion information candidates, and $N$ is a positive integer.

At 103, the encoder determines a motion information candidate index of the current block according to the determined motion information candidate list of the current block.

At 104, the encoder encodes the motion information candidate index of the current block and signals encoded bits into a bitstream.

In embodiments of the disclosure, since partial motion information candidates in the initial motion information candidate list of the current block that participate in the ordering not only include at least one first-type motion information candidate, but also include $N$ second-type motion information candidates, the following case will not occur. In a case where all the second-type motion information candidates in the initial motion information candidate list of the current block participate in the ordering, when a certain candidate among the second-type motion information candidates is selected as a motion information candidate of the current block, the number of bits required for a corresponding candidate index may increase. In other words, in embodiments of the disclosure, the $N$ second-type motion information candidates in the initial motion information candidate list of the current block also participate in the ordering, and if a certain candidate among the second-type motion information candidates participating in the ordering is selected as the motion information candidate of the current block, since an index of the certain candidate may be small, the number of bits required for coding can be reduced and the coding efficiency can be improved.

The video decoding method includes operations at 111 to 116 below.

At 111, a decoder determines an initial motion information candidate list of a current block. The initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule.

At 112, the decoder determines a motion information candidate list of the current block based on ordering partial motion information candidates in the initial motion information candidate list. The partial motion information candidates include at least one first-type motion information candidate and $N$ second-type motion information candidates, and $N$ is a positive integer.

At 113, the decoder decodes a bitstream to determine a motion information candidate index of the current block.

At 114, the decoder determines an inter prediction value of the current block according to the motion information candidate index and the motion information candidate list of the current block.

At 115, the decoder decodes the bitstream to determine a residual value of the current block.

At 116, the decoder determines a reconstructed value of the current block according to the residual value and the inter prediction value of the current block.

In embodiments of the disclosure, since partial motion information candidates in the initial motion information candidate list of the current block that participate in the ordering not only include at least one first-type motion information candidate, but also include $N$ second-type motion information candidates, the following case will not occur. Since all the second-type motion information candidates in the initial motion information candidate list of the current block are located at the end of the list, none of the second-type motion information candidates is selected as the motion information candidate of the current block because of a high rate-distortion cost, but a reference block corresponding to a certain one of the second-type motion information candidates better matches the current block, so that the accuracy of inter prediction is reduced due to such second-type motion information candidate being unselected. In other words, in embodiments of the disclosure, the $N$ second-type motion information candidates in the initial motion information candidate list of the current block also participate in the ordering, so that the second-type motion information candidate corresponding to the reference block that better matches the current block has a chance to be ordered in the front, thereby increasing the chance that the motion information candidate is selected as the motion information candidate of the current block, and increasing the probability of improving the accuracy of inter prediction, i.e., improving the decoding performance.

The following will describe further optional implementations of the above operations and related terms.

In embodiments of the disclosure, the type of motion information candidate included in the first-type motion information candidates is not limited, which may include at least one of a spatial motion information candidate, a temporal motion information candidate, a non-neighbouring spatial motion information candidate, a history-based motion information candidate, or a pairwise average motion information candidate. The motion information candidate is also referred to as a merge candidate.

In some embodiments, two components of the motion vector of the preset value both take a value of 0. Accordingly, the second-type motion information candidate may be referred to as a zero motion vector merge candidate.

In some embodiments, the $N$ second-type motion information candidates in the partial motion information candidates are $N$ second-type motion information candidates that are sequentially added to the initial motion information candidate list during construction of the initial motion information candidate list.

In some embodiments, the $N$ second-type motion information candidates in the partial motion information candidates are $N$ second-type motion information candidates that are ordered after the first-type motion information candidates in the initial motion information candidate list.

In some embodiments, the partial motion information candidates include all the first-type motion information candidates in the initial motion information candidate list.

In some embodiments, $N$ is a preset value. For example, the value of $N$ is 1, 2, or 3. For another example, the value of $N$ is less than or equal to the number of allowed reference pictures. For another example, the value of $N$ is less than the number of the second-type motion information candidates in the initial motion information candidate list. The number of the second-type motion information candidates is greater than or equal to 2.

In some embodiments, the $N$ second-type motion information candidates are not redundant with the first-type motion information candidate, and the $N$ second-type motion information candidates in the partial motion information candidates are second-type motion information candidates in the initial motion information candidate list that do not satisfy a first condition. Further, in some embodiments, the first condition is that a motion vector of the second-type motion information candidate is equal to a motion vector of the first-type motion information candidate and a reference picture index of the second-type motion information candidate is equal to a reference picture index of the first-type motion information candidate. Alternatively, in some other embodiments, the first condition is that the second-type motion information candidate is close to the first-type motion information candidate in the partial motion information candidates as follows. A reference picture index of the second-type motion information candidate is equal to a reference picture index of the first-type motion information candidate, and at least one of the following conditions is satisfied. An absolute value of a difference between a vertical component of a motion vector of the second-type motion information candidate and a vertical component of a motion vector of the first-type motion information candidate is less than a first threshold. An absolute value of a difference between a horizontal component of the motion vector of the second-type motion information candidate and a horizontal component of the motion vector of the first-type motion information candidate is less than a second threshold.

From another perspective, the $N$ second-type motion information candidates in the partial motion information candidates are second-type motion information candidates in the initial motion information candidate list that satisfy a fourth condition. In some embodiments, the fourth condition is that the second-type motion information candidate is different from the first-type motion information candidate in the partial motion information candidates as follows. A motion vector of the second-type motion information candidate is unequal to a motion vector of the first-type motion information candidate. Alternatively, a reference picture index of the second-type motion information candidate is unequal to a reference picture index of the first-type motion information candidate. Alternatively, the motion vector of the second-type motion information candidate is unequal to the motion vector of the first-type motion information candidate, and the reference picture index of the second-type motion information candidate is unequal to the reference picture index of the first-type motion information candidate.

In some other embodiments, the fourth condition is that the second-type motion information candidate is not close to the first-type motion information candidate in the partial motion information candidates as follows. A reference picture index of the second-type motion information candidate is equal to a reference picture index of the first-type motion information candidate, and at least one of the following conditions is satisfied. An absolute value of a difference between a vertical component of a motion vector of the second-type motion information candidate and a vertical component of a motion vector of the first-type motion information candidate is greater than a first threshold. An absolute value of a difference between a horizontal component of the motion vector of the second-type motion information candidate and a horizontal component of the motion vector of the first-type motion information candidate is greater than a second threshold.

In some other embodiments, the $N$ second-type motion information candidates in the partial motion information candidates are second-type motion information candidates in the initial motion information candidate list that satisfy a second condition.

Further, in some embodiments, the second-type motion information candidate satisfying the second condition includes a first one of the second-type motion information candidates in a new order, after adaptive reordering of the second-type motion information candidates in the initial motion information candidate list.

In some other embodiments, the second-type motion information candidate satisfying the second condition includes a second-type motion information candidate with a minimum template matching error in the initial motion information candidate list.

In some embodiments, the current block at least includes a first number of samples. Further, in some embodiments, the first number is 16.

In some other embodiments, a size of the current block satisfies a third condition preset.

Further, in some embodiments, the third condition is that a width and a height of the current block are less than or equal to a first preset size. For example, the first preset size is $128 \times 128$.

Further, in some other embodiments, the third condition is that a width and a height of the current block are greater than or equal to a second preset size. For example, the second preset size is $4 \times 4$.

Further, in some other embodiments, the third condition is that a width and a height of the current block are less than or equal to a first preset size and the width and the height of the current block are greater than or equal to a second preset size. For example, the first preset size is $128 \times 128$, and the second preset size is $4 \times 4$.

In some embodiments, the motion information candidate list of the current block is determined based on ordering the partial motion information candidates in the initial motion information candidate list as follows. Template matching errors of the partial motion information candidates are determined. The partial motion information candidates are ordered according to the template matching errors.

Further, in some embodiments, the template matching errors of the partial motion information candidates are determined as follows. A template of the current block is determined. Corresponding templates of the template in reference pictures indicated by reference picture indexes of the partial motion information candidates are determined according to motion vectors of the partial motion information candidates. The template matching errors are determined according to the template and the corresponding templates.

Further, in some embodiments, the template matching errors are determined according to the template and the corresponding templates as follows. Errors between the template and the corresponding templates are calculated according to an error criterion preset.

For example, the error criterion is one of: SAD, SATD, MSE, and SSD. Accordingly, the partial motion information candidates are ordered according to the template matching errors as follows. The partial motion information candidates are ordered in an ascending order of the template matching errors.

For another example, the error criterion is one of: peak signal-to-noise ratio (PSNR) and structural similarity (SSIM). Accordingly, the partial motion information candidates are ordered according to the template matching errors as follows. The partial motion information candidates are ordered in a descending order of the template matching errors.

In some embodiments, the partial motion information candidates are $M$ motion information candidates, and $M$ is an integer greater than 1. Accordingly, the motion information candidate list of the current block is determined as follows. Motion information candidate indexes corresponding to the ordered partial motion information candidates in the motion information candidate list of the current block are determined as 0 to $M$ - 1.

In some embodiments, the method further includes the following. Other motion information candidates in the motion information candidate list of the current block except the ordered partial motion information candidates are determined.

In some embodiments, motion information candidate indexes corresponding to the unordered other motion information candidates or the ordered other motion information candidates in the motion information candidate list of the current block are greater than the motion information candidate indexes corresponding to the ordered partial motion information candidates.

In some embodiments, the method further includes the following. The other motion information candidates are ordered by using a same method for ordering the partial motion information candidates.

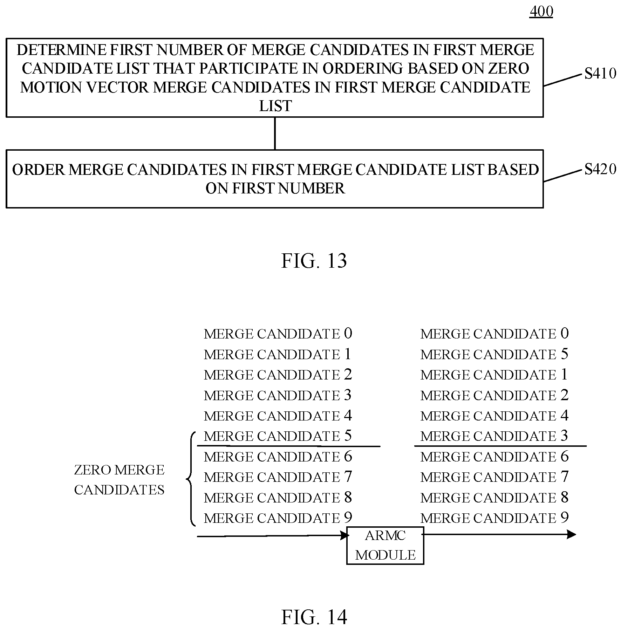

FIG. 13 is a schematic flowchart of an ordering method 400 provided in embodiments of the disclosure. It may be understood that, the ordering method 400 may be performed by an ordering apparatus. For example, when the ordering apparatus is a decoder or a unit or module in a decoding framework, the ordering method 400 may be performed by the decoder or the decoding framework 200 illustrated in FIG. 2. For another example, when the ordering apparatus is an encoder or a unit or module in an encoding framework, the ordering method may be performed by the encoder or the encoding framework 100 illustrated in FIG. 1. For ease of description, the ordering apparatus will be taken as an example for illustration.

As illustrated in FIG. 13, the ordering method 400 may include part or all of the following.

At S410, the first number of merge candidates in a first merge candidate list that participate in ordering is determined based on zero motion vector merge candidates in the first merge candidate list.

At S420, the merge candidates in the first merge candidate list are ordered based on the first number, so as to obtain a second merge candidate list.

By taking the zero motion vector merge candidates in the first merge candidate list into consideration, the first number of merge candidates in the first merge candidate list that participate in the ordering is determined. In other words, the first number is determined based on the zero motion vector merge candidates in the first merge candidate list, instead of determining the first number by directly taking all merge candidates in the first merge candidate list or from the perspective of non-zero motion vector merge candidates in the first merge candidate list. Therefore, a case where all the zero motion vector merge candidates in the first merge candidate list participate in the ordering or do not participate in the ordering will not occur, which can improve the accuracy of the second merge candidate list and thus improve the coding performance.

It may be understood that in embodiments of the disclosure, the first merge candidate list may be the merge candidate list described above, and the second merge candidate list may be a merge candidate list subjected to the ordering. Accordingly, for specific implementations of the merge candidate list, reference can be made to the related contents described above in S320. In addition, this disclosure is intended to improve the number of merge candidates participating in ordering during the ordering of the merge candidates in the first merge candidate list. For the principles related to the ordering (for example, the derivation of a matching cost algorithm and the derivation of the ordered merge candidate list), reference can be made to the contents related to operations at S312. Furthermore, after the second merge candidate list is obtained, for the application of the second merge candidate list, reference can be made to the contents related to operations at S314 and S315 above, which will not be repeated herein.

In some embodiments, operations at S410 may include the following.

The first number is determined based on whether there is redundancy between the $N$-th zero motion vector merge candidate in the first merge candidate list and a merge candidate located before the $N$-th zero motion vector merge candidate in the first merge candidate list.

Exemplarily, for introducing redundancy check to the zero motion vector merge candidates in the first merge candidate list, $N$ can be determined, and then redundancy check can be performed on only the $N$-th zero motion vector merge candidate. Further, the first number is determined based on whether there is redundancy between the $N$-th zero motion vector merge candidate in the first merge candidate list and the merge candidate located before the $N$-th zero motion vector merge candidate in the first merge candidate list.

Exemplarily, the value of $N$ is an integer greater than or equal to 1.

Exemplarily, the value of $N$ is less than the total number of zero motion vector merge candidates in the first merge candidate list. That is, the $N$-th zero motion vector merge candidate is a zero motion vector merge candidate except the last zero motion vector merge candidate in the first merge candidate list.

Exemplarily, based on whether there is redundancy between the $N$-th zero motion vector merge candidate and the merge candidate located before the $N$-th zero motion vector merge candidate in the first merge candidate list, whether to consider the 1st zero motion vector merge candidate to the $N$-th zero motion vector merge candidate may be determined, or whether the 1st zero motion vector merge candidate to the $N$-th zero motion vector merge candidate participate in the ordering may be determined.

In other alternative embodiments, based on whether there is redundancy between the $N$-th zero motion vector merge candidate and the merge candidate located before the $N$-th zero motion vector merge candidate in the first merge candidate list, whether to consider the 1st zero motion vector merge candidate to the $(N\text{-}1)$-th zero motion vector merge candidate may also be determined, or whether the 1st zero motion vector merge candidate to the $(N\text{-}1)$-th zero motion vector merge candidate participate in the ordering may be determined. Further, based on whether there is redundancy between the $N$-th zero motion vector merge candidate and the merge candidate located before the $N$-th zero motion vector merge candidate in the first merge candidate list, whether to consider the $N$-th zero motion vector merge candidate may be determined, or whether the $N$-th zero motion vector merge candidate participates in the ordering may be determined.

Exemplarily, a derivation algorithm for the first number can be implemented as follows.

Input: the first merge candidate list and the $N$-th zero motion vector merge candidate.

Output: the number of merge candidates participating in the ordering, i.e., the first number.

The value of the first number is set to $M+N\text{-}1$ or $M+N$. $M$ indicates the number of merge candidates in the first merge candidate list before addition of the zero motion vector merge candidates.

It may be noted that, $N$ may have different options. For example, $N$ may be 1, 2, or another value.

In some embodiments, if there is redundancy between the $N$-th zero motion vector merge candidate and the merge candidate located before the $N$-th zero motion vector merge candidate in the first merge candidate list, $M+N\text{-}1$ is determined as the first number. Otherwise, $M+N$ is determined as the first number. $M$ indicates the number of merge candidates in the first merge candidate list before addition of the zero motion vector merge candidates.

Exemplarily, the $N$-th zero motion vector merge candidate may also be referred to as the $(M+N)$-th merge candidate in the first merge candidate list.

Exemplarily, $M$ indicates the number of merge candidates in the first merge candidate list before addition of the zero motion vector merge candidates. More specifically, "before addition of the zero motion vector merge candidates" may refer to "before addition of the zero motion vector merge candidates and after addition of the spatial merge candidate, the temporal merge candidate, the non-neighbouring spatial merge candidate, the history-based merge candidate, and the pairwise average merge candidate". In other words, $M$ may be the number of merge candidates in the first merge candidate list after the spatial merge candidate, the temporal merge candidate, the non-neighbouring spatial merge candidate, the history-based merge candidate, and the pairwise average merge candidate are added to the first merge candidate list.

Exemplarily, *M* may also be referred to as numOrigMergeCand described above, and the first number may also be referred to as numSortMVP described above, i.e., the number of merge candidates participating in the ordering. For the (numOrigMergeCand+N)-th merge candidate (i.e., the *N*-th zero-motion vector merge candidate) in the first merge candidate list, redundancy check may be performed for the (numOrigMergeCand+N)-th merge candidate with the first numOrigMergeCand+N-1 merge candidates in the first merge candidate list. If there is redundancy, numSortMVP is set equal to numOrigMergeCand+N-1. If there is no redundancy, numSortMVP is set equal to numOrigMergeCand+N.

Exemplarily, when *N*=1, if there is redundancy between the 1st zero motion vector merge candidate and a merge candidate located before the 1st zero motion vector merge candidate in the first merge candidate list, then *M* is determined as the first number. Otherwise, *M+1* is determined as the first number. *M* indicates the number of merge candidates in the first merge candidate list before addition of the zero motion vector merge candidates.

In this embodiment, if there is no redundancy between the *N*-th zero motion vector merge candidate and merge candidates located before the *N*-th zero motion vector merge candidate in the first merge candidate list, the *N*-th zero motion vector merge candidate is ordered together with the merge candidates located before the *N*-th zero motion vector merge candidate in the first merge candidate list, so as to obtain a second merge candidate list. In this way, a non-ideal case where all the zero motion vector merge candidates participate in the ordering will not occur. In addition, it can be ensured that the zero motion vector merge candidate has a chance to participate in the ordering and thus has a chance to be used as an optimal merge candidate for post-processing and motion compensation, which can improve the quality to a certain extent and thus improve the coding performance.

FIG. 14 is a schematic diagram illustrating ARMC ordering of a first merge candidate list based on a first number provided in embodiments of the disclosure.

As illustrated in FIG. 14, it is assumed that the first merge candidate list sequentially includes merge candidate 0 to merge candidate 9, where merge candidate 0 to merge candidate 4 are merge candidates added before addition of a zero motion vector merge candidate, and merge candidate 5 to merge candidate 9 are last added zero motion vector merge candidates.

If the *N*-th zero motion vector merge candidate is the 1st zero motion vector merge candidate, i.e., *N*=1, then the number numSortMVP of merge candidates participating in the ordering is determined based on whether there is redundancy between the 1st zero motion vector merge candidate in the first merge candidate list and merge candidates located before the 1st zero motion vector merge candidate in the first merge candidate list. For example, if there is redundancy between the 1st zero motion vector merge candidate and a merge candidate located before the 1st zero motion vector merge candidate in the first merge candidate list, then numSortMVP is determined as 5+1-1=5, and otherwise, numSortMVP is determined as 5+1=6. If numSortMVP is 6, then ARMC ordering is performed on merge candidate 0 to merge candidate 5. As illustrated in FIG. 14, a second merge candidate list that is subjected to the ARMC ordering includes merge candidate 0, merge candidate 5, merge candidate 1, merge candidate 2, merge candidate 4 and merge candidate 3, and merge candidate 6 to merge candidate 9, sequentially.

In this embodiment, if there is no redundancy between the 1st zero motion vector merge candidate and merge candidates already in the first merge candidate list, then ARMC ordering is performed on the 1st filled zero motion vector merge candidate together with previously-added non-zero motion vector merge candidates, so as to obtain a final second merge candidate list. That is, the 1st filled zero motion vector merge candidate (merge candidate 5) and the added non-zero motion vector merge candidates (i.e., merge candidate 0 to merge candidate 4) in the first merge candidate list are ordered in an ascending order of template matching costs. As such, not only the zero motion vector merge candidates filled in the first merge candidate list can be used, but also a case where all zero motion vector merge candidates in the first merge candidate list participate in the ARMC ordering will not occur, which can improve the prediction accuracy of an MV of a current block and thus improve the coding performance of the current block.

In some embodiments, if *M+N* is less than or equal to *K*, the first number is determined based on whether there is redundancy between the *N*-th zero motion vector merge candidate and merge candidates located before the *N*-th zero motion vector merge candidate in the first merge candidate list. *K* indicates the maximum number of allowed merge candidates in the first merge candidate list.

Exemplarily, *M* may also be referred to as numOrigMergeCand described above, the first number may also be referred to as numSortMVP described above, i.e., the number of merge candidates participating in the ordering, the maximum number of merge candidates in the first merge candidate list may also be referred to as MaxNumMergeCand, and the total number of zero motion vector merge candidates in the first merge candidate list may also be referred to as numZeroMergeCand. In this case, during redundancy check of the (numOrigMergeCand+N)-th merge candidate (i.e., the *N*-th zero motion vector merge candidate) in the first merge candidate list, if numOrigMergeCand+N is less than or equal to MaxNumMergeCand or numZeroMergeCand is greater than or equal to *N*, then redundancy check is performed on the (numOrigMergeCand+N)-th merge candidate (i.e., the *N*-th zero motion vector merge candidate) in the first merge candidate list. Otherwise, it is determined that redundancy check is not performed on the (numOrigMergeCand+N)-th merge candidate (i.e., the *N*-th zero motion vector merge candidate) in the first merge candidate list.

In some embodiments, *N* is determined according to the number of reference pictures available for the current block and/or *N* is pre-defined.

Exemplarily, *N* is equal to the number of reference pictures available for the current block.

Exemplarily, zero motion vector merge candidates participating in the ordering have different reference picture indexes, and for example, correspond to reference picture indexes 0, 1, 2, and the like.

Since reference picture indexes of the zero motion vector merge candidates filled in the first merge candidate list are not necessarily the same, there are still some differences between the zero motion vector merge candidates filled in the first merge candidate list. Here, *N* is determined according to the number of reference pictures available for the current block, so that several zero motion vector merge candidates with different reference picture indexes filled in the first merge candidate list can be ordered together with non-zero motion vector merge candidates in the first merge candidate list, which can improve the prediction accuracy of the MV of the current block and thus improve the coding performance of the current block.

In other alternative embodiments, the first number may also be determined or updated by means of redundancy check of part or all of the zero motion vector merge candidates in the first merge candidate list, which is not limited in the disclosure.

As an example, redundancy check may be performed on the zero motion vector merge candidates in the first merge candidate list based on an order in which the zero motion vector merge candidates are added to the first merge candidate list. Until a current zero motion vector merge candidate is checked to be the first zero motion vector merge candidate in the first merge candidate list that is not redundant with merge candidates located before the current zero motion vector merge candidate in the first merge candidate list, the first number is determined based on an order of the current zero motion vector merge candidate in the first merge candidate list.

For example, redundancy check may be performed on the zero motion vector merge candidates in the first merge candidate list based on an order in which the zero motion vector merge candidates are added to the first merge candidate list. Until a current zero motion vector merge candidate is checked to be the first zero motion vector merge candidate in the first merge candidate list that is not redundant with merge candidates located before the current zero motion vector merge candidate in the first merge candidate list, *M+N* is determined as the first number. *M* indicates the number of merge candidates in the first merge candidate list before addition of the zero motion vector merge candidates, and *N* indicates that the current zero motion vector merge candidate is the *N*-th zero motion vector merge candidate in the first merge candidate list. In other words, if the current zero motion vector merge candidate is the first zero motion vector merge candidate in the first merge candidate list that is not redundant with merge candidates located before the current zero motion vector merge candidate in the first merge candidate list, then the current zero motion vector merge candidate and the merge candidates located before the current zero motion vector merge candidate in the first merge candidate list all can participate in the ordering. Alternatively, in a case where there is redundancy between the first *N*-1 zero motion vector merge candidates in the first merge candidate list and a merge candidate located before the *N*-th zero motion vector merge candidate in the first merge candidate list, and there is no redundancy between the *N*-th zero motion vector merge candidate and the merge candidates located before the *N*-th zero motion vector merge candidate in the first merge candidate list, *M+N* is determined as the first number. *M* indicates the number of merge candidates in the first merge candidate list before addition of the zero motion vector merge candidates, and *N* indicates that the current zero motion vector merge candidate is the *N*-th zero motion vector merge candidate in the first merge candidate list.

For another example, redundancy check may be performed on the zero motion vector merge candidates in the first merge candidate list based on an order in which the zero motion vector merge candidates are added to the first merge candidate list, and whether there is redundancy between a current zero motion vector merge candidate and merge candidates located before the current zero motion vector merge candidate in the first merge candidate list is determined. If there is no redundancy, then the first number is updated to the number of merge candidates located before the current zero motion vector merge candidate in the first merge candidate list plus 1, that is, the current zero motion vector merge candidate and all the merge candidates located before the current zero motion vector merge candidate can participate in the ordering, and the update of the first number stops. If there is redundancy, then the first number is updated to the number of merge candidates in the first merge candidate list before addition of the current zero motion vector merge candidate to the first merge candidate list plus 1, and the first number continues to be updated based on redundancy check of the next zero motion vector merge candidate following the current zero motion vector merge candidate.

As another example, the first number may be determined or updated by means of redundancy check of each zero motion vector merge candidate in the first merge candidate list.

For example, redundancy check may be performed on each zero motion vector merge candidate in the first merge candidate list. For example, if there is no redundancy between a current zero motion vector merge candidate and merge candidates located before the current zero motion vector merge candidate in the first merge candidate list, then it is determined that the current zero motion vector merge candidate is a non-redundant zero motion vector merge candidate. Otherwise, it is determined that the current zero motion vector merge candidate is a redundant zero motion vector merge candidate. Based on this, the total number of non-redundant zero motion vector merge candidates and non-zero motion vector merge candidates in the first merge candidate list can be determined as the first number. It may be understood that, in this case, an order of zero motion vector merge candidates except the non-redundant zero motion vector merge candidates in the first merge candidate list, i.e., zero motion vector merge candidates that do not participate in the ordering, in the second merge candidate list is not limited in embodiments of the disclosure. For example, a relative order of the zero motion vector merge candidates that do not participate in the ordering in a first zero merge candidate list and a relative order of the zero motion vector merge candidates that do not participate in the ordering in a second zero merge candidate list are the same, and the zero motion vector merge candidates that do not participate in the ordering are located after the merge candidates that participate in the ordering.

In some embodiments, if a merge candidate located before the $N$-th zero motion vector merge candidate in the first merge candidate list satisfies a preset condition, then there is redundancy between the $N$-th zero motion vector merge candidate and the merge candidate located before the $N$-th zero motion vector merge candidate in the first merge candidate list. Otherwise, there is no redundancy between the $N$-th zero motion vector merge candidate and the merge candidate located before the $N$-th zero motion vector merge candidate in the first merge candidate list.

The preset condition is that the merge candidate located before the $N$-th zero motion vector merge candidate includes at least one of: a merge candidate with the same reference picture index as a reference picture index of the $N$-th zero motion vector merge candidate and the same MV as an MV of the $N$-th zero motion vector merge candidate, a merge candidate with the same reference picture index as the reference picture index of the $N$-th zero motion vector merge candidate and for which a difference between an MV of the merge candidate and the MV of the $N$-th zero motion vector merge candidate is less than or equal to a first threshold, a merge candidate with the same reference picture index as the reference picture index of the $N$-th zero motion vector merge candidate and for which a difference between a reliability of an MV of the merge candidate and a reliability of the MV of the $N$-th zero motion vector merge candidate is greater than or equal to a second threshold, a merge candidate with the same MV as the MV of the $N$-th zero motion vector merge candidate, a merge candidate for which a difference between an MV of the merge candidate and the MV of the $N$-th zero motion vector merge candidate is less than or equal to the first threshold, or a merge candidate for which a difference between a reliability of an MV of the merge candidate and the reliability of the MV of the $N$-th zero motion vector merge candidate is greater than or equal to the second threshold.

In other words, a redundancy check method for the $N$-th zero motion vector merge candidate can be performed in four ways.

In a first redundancy check method, when an MV value of the $N$-th zero motion vector merge candidate is identical to an MV value of a certain merge candidate already in the first merge candidate list and a reference picture index of the $N$-th zero motion vector merge candidate is identical to a reference picture index of the certain merge candidate, the $N$-th zero motion vector merge candidate is considered redundant, and otherwise, the $N$-th zero motion vector merge candidate is considered non-redundant. Optionally, in a regular merge mode, redundancy check is often performed in this way.

In a second redundancy check method, when a reference picture index of the $N$-th zero motion vector merge candidate is the same as a reference picture index of a certain merge candidate already in the first merge candidate list and an MV of the $N$-th zero motion vector merge candidate is very close to an MV of the certain merge candidate, the $N$-th zero motion vector merge candidate is considered redundant, and otherwise, the $N$-th zero motion vector merge candidate is considered non-redundant. Optionally, in a TM merge mode, redundancy check is often performed in this way.

In a third redundancy check method, when a reference picture index of the $N$-th zero motion vector merge candidate is the same as a reference picture index of a certain merge candidate already in the first merge candidate list and a reliability of an MV of the $N$-th zero motion vector merge candidate is far away from a reliability of an MV of the certain merge candidate, the N-th zero motion vector merge candidate is considered redundant, and otherwise, the N-th zero motion vector merge candidate is considered non-redundant.

In a fourth redundancy check method, when an MV value of the $N$-th zero motion vector merge candidate is the same as an MV value of a certain merge candidate already in the first merge candidate list, the $N$-th zero motion vector merge candidate is considered redundant, and otherwise, the $N$-th zero motion vector merge candidate is considered non-redundant.

In a fifth redundancy check method, when an MV of the $N$-th zero motion vector merge candidate is very close to an MV of a certain merge candidate already in the first merge candidate list, the $N$-th zero motion vector merge candidate is considered redundant, and otherwise, the $N$-th zero motion vector merge candidate is considered non-redundant.

In a sixth redundancy check method, when a reliability of an MV of the $N$-th zero motion vector merge candidate is far away from a reliability of an MV of a certain merge candidate, the $N$-th zero motion vector merge candidate is considered redundant, and otherwise, the $N$-th zero motion vector merge candidate is considered non-redundant.

It may be understood that, a difference between an MV of the merge candidate located before the $N$-th zero motion vector merge candidate and the MV of the $N$-th zero motion vector merge candidate may be a difference obtained by subtracting the MV of the $N$-th zero motion vector merge candidate from the MV of the merge candidate located before the $N$-th zero motion vector merge candidate, or may be a difference obtained by subtracting the MV of the merge candidate located before the *N*-th zero motion vector merge candidate from the MV of the N-th zero motion vector merge candidate. For example, when the MV of the merge candidate located before the *N*-th zero motion vector merge candidate is greater than the MV of the *N*-th zero motion vector merge candidate, the difference between the MV of the merge candidate located before the *N*-th zero motion vector merge candidate and the MV of the *N*-th zero motion vector merge candidate may be the difference obtained by subtracting the MV of the *N*-th zero motion vector merge candidate from the MV of the merge candidate located before the *N*-th zero motion vector merge candidate. For another example, when the MV of the merge candidate located before the *N*-th zero motion vector merge candidate is less than the MV of the *N*-th zero motion vector merge candidate, the difference between the MV of the merge candidate located before the *N*-th zero motion vector merge candidate and the MV of the *N*-th zero motion vector merge candidate may be the difference obtained by subtracting the MV of the merge candidate located before the *N*-th zero motion vector merge candidate from the MV of the *N*-th zero motion vector merge candidate. Similarly, a difference between a reliability of the MV of the merge candidate located before the *N*-th zero motion vector merge candidate and the reliability of the MV of the *N*-th zero motion vector merge candidate may be a difference obtained by subtracting the reliability of the MV of the *N*-th zero motion vector merge candidate from the reliability of the MV of the merge candidate located before the *N*-th zero motion vector merge candidate, or may be a difference obtained by subtracting the reliability of the MV of the merge candidate located before the *N*-th zero motion vector merge candidate from the reliability of the MV of the N-th zero motion vector merge candidate. For example, when the reliability of the MV of the merge candidate located before the *N*-th zero motion vector merge candidate is greater than the reliability of the MV of the *N*-th zero motion vector merge candidate, the difference between the reliability of the MV of the merge candidate located before the *N*-th zero motion vector merge candidate and the reliability of the MV of the *N*-th zero motion vector merge candidate may be the difference obtained by subtracting the reliability of the MV of the *N*-th zero motion vector merge candidate from the reliability of the MV of the merge candidate located before the *N*-th zero motion vector merge candidate. For another example, when the reliability of the MV of the merge candidate located before the *N*-th zero motion vector merge candidate is less than the reliability of the MV of the *N*-th zero motion vector merge candidate, the difference between the reliability of the MV of the merge candidate located before the *N*-th zero motion vector merge candidate and the reliability of the MV of the *N*-th zero motion vector merge candidate may be the difference obtained by subtracting the reliability of the MV of the merge candidate located before the *N*-th zero motion vector merge candidate from the reliability of the MV of the *N*-th zero motion vector merge candidate. Embodiments of the disclosure are not limited in this regard.

In other alternative embodiments, the preset condition may also be another condition, which is not limited in the disclosure.

For example, the preset condition may be that the merge candidate located before the *N*-th zero motion vector merge candidate includes at least one of: a merge candidate with the same reference picture index as the reference picture index of the *N*-th zero motion vector merge candidate and for which an absolute value of a difference between an MV of the merge candidate and an MV of the *N*-th zero motion vector merge candidate is less than or equal to a first threshold, a merge candidate with the same reference picture index as the reference picture index of the *N*-th zero motion vector merge candidate and for which an absolute value of a difference between a reliability of an MV of the merge candidate and a reliability of the MV of the *N*-th zero motion vector merge candidate is greater than or equal to a second threshold, a merge candidate for which an absolute value of a difference between an MV of the merge candidate and the MV of the *N*-th zero motion vector merge candidate is less than or equal to the first threshold, or a merge candidate for which an absolute value of a difference between a reliability of an MV of the merge candidate and the reliability of the MV of the *N*-th zero motion vector merge candidate is greater than or equal to the second threshold.

It may be noted that, whether the MV of the *N*-th zero motion vector merge candidate is redundant with an MV of a certain merge candidate already in the first merge candidate list is only used to determine the first number, and does not affect the construction of the first merge candidate list. In other words, regardless of whether the MV of the *N*-th zero motion vector merge candidate is redundant with the MV of the certain merge candidate already in the first merge candidate list, the *N*-th zero motion vector merge candidate needs to be added to the first merge candidate list.

Exemplarily, the merge candidate with the same MV as the MV of the *N*-th zero motion vector merge candidate may be a merge candidate whose component MVx and component MVy are both zero.

In some embodiments, the first threshold is pre-defined and/or determined according to the size of the current block, and the second threshold is pre-defined and/or determined according to the size of the current block.

Exemplarily, a preset threshold can be set according to the number $S$ of samples in the current block. For example, when $S<64$, the first threshold is $1<<4$. When $64<=S<256$, the first threshold is $2<<4$. When $S>=256$, the first threshold is $4<<4$. In the above, $x << y$ indicates that $x$ is shifted left by $y$ bits in a binary form, and specifically, a most significant bit is shifted out and an empty location of a least significant bit is filled with a zero. $<=$ indicates being less than or equal to, $<$ indicates being less than, and $>=$ indicates being greater than or equal to.

In some embodiments, the difference between the MV of the merge candidate and the MV of the *N*-th zero motion vector merge candidate is less than or equal to the first threshold as follows. If the *N*-th zero motion vector merge candidate includes a first MV and a second MV, then a horizontal difference and a vertical difference between the first MV of a first merge candidate located before the *N-th* zero motion vector merge candidate and the first MV of the *N*-th zero motion vector merge candidate are both less than or equal to the first threshold, and a horizontal difference and a vertical difference between the second MV of the first merge candidate and the second MV of the *N*-th zero motion vector merge candidate are both less than or equal to the first threshold. If the *N*-th zero motion vector merge candidate includes the first MV, then the horizontal difference and the vertical difference between the first MV of the first merge candidate and the first MV of the *N*-th zero motion vector merge candidate are both less than or equal to the first threshold. If the *N*-th zero motion vector merge candidate includes the second MV, then the horizontal difference and the vertical difference between the second MV of the first merge candidate and the second MV of the *N*-th zero motion vector merge candidate are both less than or equal to the first threshold.

Exemplarily, the first MV is List 0 MV (mvL0), and the second MV is List 1 MV (MVL1).

Exemplarily, in a case where the *N*-th zero motion vector merge candidate includes the first MV and the second MV, when a reference picture index of the first MV of the *N*-th zero motion vector merge candidate is the same as a reference picture index of the first MV of the certain merge candidate, a reference picture index of the second MV of the *N*-th zero motion vector merge candidate is the same as a reference picture index of the second MV of the certain merge candidate, and a horizontal difference and a vertical difference between the first MV of the *N*-th zero motion vector merge candidate and the first MV of the certain merge candidate as well as a horizontal difference and a vertical difference between the second MV of the *N*-th zero motion vector merge candidate and the second MV of the certain merge candidate are all less than the preset threshold, it is determined that the *N*-th zero motion vector merge candidate is redundant with the certain merge candidate. In other words, when there is a certain merge candidate in the first merge candidate list, where a horizontal difference and a vertical difference between the first MV of the certain merge candidate and the first MV of the N-th zero motion vector merge candidate as well as a horizontal difference and a vertical difference between the second MV of the certain merge candidate and the second MV of the *N*-th zero motion vector merge candidate are all less than the preset threshold, a reference picture index of the first MV of the certain merge candidate is the same as a reference picture index of the first MV of the *N*-th zero motion vector merge candidate, and a reference picture index of the second MV of the certain merge candidate is the same as a reference picture index of the second MV of the *N*-th zero motion vector merge candidate, it can be determined that the *N*-th zero motion vector merge candidate is redundant with the certain merge candidate.

Exemplarily, in a case where the *N*-th zero motion vector merge candidate includes the first MV (or the second MV), when the reference picture index of the first MV (or the second MV) of the *N*-th zero motion vector merge candidate is the same as the reference picture index of the first MV (or the second MV) of the certain merge candidate, and the horizontal difference and the vertical difference between the first MV (or the second MV) of the N-th zero motion vector merge candidate and the first MV (or the second MV) of the certain merge candidate are both less than the preset threshold, it is determined that the N-th zero motion vector merge candidate is redundant with the certain merge candidate. In other words, when there is a certain merge candidate in the merge candidate list, where a horizontal difference and a vertical difference between the first MV (or the second MV) of the certain merge candidate and the first MV (or the second MV) of the N-th zero motion vector merge candidate are both less than the preset threshold, and a reference picture index of the first MV (or the second MV) of the certain merge candidate is the same as a reference picture index of the first MV (or the second MV) of the *N*-th zero motion vector merge candidate, it can be determined that the *N*-th zero motion vector merge candidate is redundant with the certain merge candidate.

In some embodiments, after the zero motion vector merge candidates are added to the first merge candidate list, whether there is redundancy between the *N*-th zero motion vector merge candidate and the merge candidates located before the *N*-th zero motion vector merge candidate in the first merge candidate list is determined.

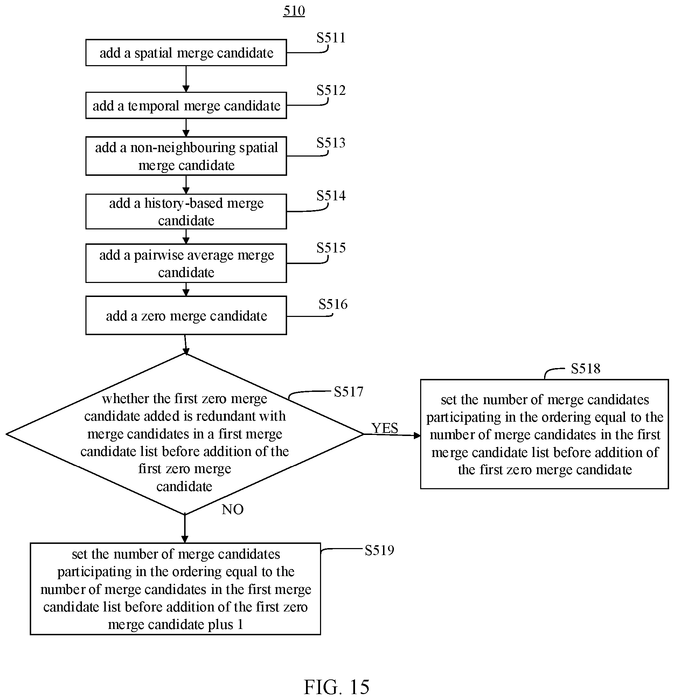

FIG. 15 is a schematic diagram of a check process 510 for performing redundancy check on a zero motion vector merge candidate after addition of the zero motion vector merge candidate to a first merge candidate list provided in embodiments of the disclosure.

As illustrated in FIG. 15, the check process for performing redundancy check on the zero motion vector merge candidate after addition of the zero motion vector merge candidate to the first merge candidate list may include the following.

At S511, a spatial merge candidate is added.

At S512, a temporal merge candidate is added.

At S513, a non-neighbouring spatial merge candidate is added.

At S514, a history-based merge candidate is added.

At S515, a pairwise average merge candidate is added.

At S516, a zero motion vector merge candidate is added.

It may be understood that, for operations at S511 to S516, reference can be made to operations at S321 to S326 described above, which will not be repeated herein.

At S517, whether the first zero motion vector merge candidate added is redundant with merge candidates in a first merge candidate list before addition of the first zero motion vector merge candidate is determined.

At S518, the number of merge candidates participating in the ordering is set equal to the number of merge candidates in the first merge candidate list before addition of the first zero motion vector merge candidate.

At S519, the number of merge candidates participating in the ordering is set equal to the number of merge candidates in the first merge candidate list before addition of the first zero motion vector merge candidate plus 1.

For operations at S516 to S519, when the addition of the zero motion vector merge candidate is needed to construct the first merge candidate list, the first zero motion vector merge candidate is added, and then other zero motion vector merge candidates continue to be added until the addition of the zero motion vector merge candidates is completed. Subsequently, redundancy check is performed for the first zero motion vector merge candidate with merge candidates added to the first merge candidate list before addition of the first zero motion vector merge candidate. If the first zero motion vector merge candidate is not redundant with the merge candidates added to the first merge candidate list before addition of the first zero motion vector merge candidate, then the number of merge candidates participating in the ordering is determined as $M+1$. If the first zero motion vector merge candidate is redundant with a merge candidate added to the first merge candidate list before addition of the first zero motion vector merge candidate, then the number of merge candidates participating in the ordering is determined as $M$.

Certainly, in FIG. 15, the $N$-th zero motion vector merge candidate is exemplarily the first zero motion vector merge candidate. In other alternative embodiments, $N$ may also be another value, which is not limited in the disclosure.

In some embodiments, whether there is redundancy between the $N$-th zero motion vector merge candidate and merge candidates located before the $N$-th zero motion vector merge candidate in the first merge candidate list is determined while the $N$-th zero motion vector merge candidate is added.

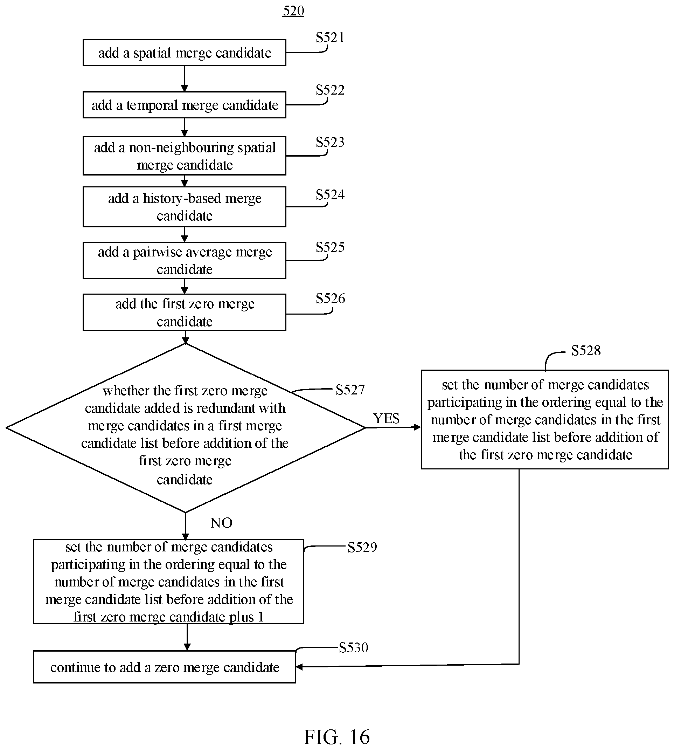

FIG. 16 is a schematic diagram of a check process 520 for performing redundancy check on a zero motion vector merge candidate while adding the zero motion vector merge candidate to a first merge candidate list provided in embodiments of the disclosure.

As illustrated in FIG. 16, the check process 510 for performing redundancy check on the zero motion vector merge candidate after addition of the zero motion vector merge candidate to the first merge candidate list may include the following.

At S521, a spatial merge candidate is added.

At S522, a temporal merge candidate is added.

At S523, a non-neighbouring spatial merge candidate is added.

At S524, a history-based merge candidate is added.

At S525, a pairwise average merge candidate is added.

It may be understood that, for operations at S521 to S525, reference can be made to operations at S321 to S325 described above, which will not be repeated herein.

At S526, the first zero motion vector merge candidate is added.

At S527, whether the first zero motion vector merge candidate added is redundant with merge candidates in a first merge candidate list before addition of the first zero motion vector merge candidate is determined.

At S528, the number of merge candidates participating in the ordering is set equal to the number of merge candidates in the first merge candidate list before addition of the first zero motion vector merge candidate.

At S529, the number of merge candidates participating in the ordering is set equal to the number of merge candidates in the first merge candidate list before addition of the first zero motion vector merge candidate plus 1.

At S530, a zero motion vector merge candidate continues to be added.

For operations at S526 to S530, when the addition of the zero motion vector merge candidate is needed to construct the first merge candidate list, the first zero motion vector merge candidate is added, and then redundancy check is performed for the first zero motion vector merge candidate with merge candidates added to the first merge candidate list before addition of the first zero motion vector merge candidate. If the first zero motion vector merge candidate is not redundant with the merge candidates added to the first merge candidate list before addition of the first zero motion vector merge candidate, then the number of merge candidates participating in the ordering is determined as $M+1$. If the first zero motion vector merge candidate is redundant with a merge candidate added to the first merge candidate list before addition of the first zero motion vector merge candidate, then the number of merge candidates participating in the ordering is determined as $M$. Then, another zero motion vector merge candidate continues to be added.

Certainly, in FIG. 16, the N-th zero motion vector merge candidate is exemplarily the first zero motion vector merge candidate. In other alternative embodiments, $N$ may also be another value, which is not limited in the disclosure.

In some embodiments, operations at S410 may include the following.

The first number is determined based on costs of the zero motion vector merge candidates in the first merge candidate list.

Exemplarily, the costs of the zero motion vector merge candidates in the first merge candidate list may be costs of predicting the current block using the zero motion vector merge candidates in the first merge candidate list.

Exemplarily, zero motion vector merge candidates participating in the ordering may be determined based on the costs of the zero motion vector merge candidates in the first merge candidate list, and then the first number is determined based on the number of the zero motion vector merge candidates participating in the ordering and the number of non-zero motion vector merge candidates in the first merge candidate list. For example, the sum of the number of the zero motion vector merge candidates participating in the ordering and the number of non-zero motion vector merge candidates in the first merge candidate list can be determined as the first number.

In some embodiments, $G$ zero motion vector merge candidates with the minimum cost can be determined based on the costs of the zero motion vector merge candidates in the first merge candidate list, and then $M+G$ is determined as the first number. $M$ indicates the number of merge candidates in the first merge candidate list before addition of the zero motion vector merge candidates.

Exemplarily, the cost of the zero motion vector merge candidate in the first merge candidate list can be determined based on the SAD of the zero motion vector merge candidate in the first merge candidate list. For example, the smaller the SAD of the zero motion vector merge candidate in the first merge candidate list, the smaller the cost of the zero motion vector merge candidate in the first merge candidate list.

Exemplarily, the cost of the zero motion vector merge candidate in the first merge candidate list can be determined based on the PSNR of the zero motion vector merge candidate in the first merge candidate list. For example, the greater the PSNR of the zero motion vector merge candidate in the first merge candidate list, the smaller the cost of the zero motion vector merge candidate in the first merge candidate list.

Exemplarily, $G$ zero motion vector merge candidates with the minimum cost can be first determined, based on the costs of the zero motion vector merge candidates in the first merge candidate list, as the zero motion vector merge candidates participating in the ordering. Then, $M+G$ is determined as the first number.

Exemplarily, $G$ zero motion vector merge candidates with the minimum cost can be determined based on costs of zero motion vector merge candidates with different reference picture indexes in the first merge candidate list. $M+G$ is determined as the first number, where $M$ indicates the number of merge candidates in the first merge candidate list before addition of the zero motion vector merge candidates.

It may be understood that, an order of zero motion vector merge candidates except the $G$ zero motion vector merge candidates with the minimum cost in the first merge candidate list, i.e., zero motion vector merge candidates that do not participate in the ordering, in the second merge candidate list is not limited in the disclosure. For example, a relative order of the zero motion vector merge candidates that do not participate in the ordering in a first zero merge candidate list and a relative order of the zero motion vector merge candidates that do not participate in the ordering in a second zero merge candidate list are the same, and the zero motion vector merge candidates that do not participate in the ordering are located after the merge candidates that participate in the ordering.

Exemplarily, $G$ is pre-defined.

Exemplarily, a derivation algorithm for the first number can be implemented as follows.

Input: $M$ (or $M$ and $G$).

Output: the number of merge candidates participating in the ordering, i.e., the first number.

The value of the first number is set to $M+G$. $M$ indicates the number of merge candidates in the first merge candidate list before addition of the zero motion vector merge candidates.

In some embodiments, the zero motion vector merge candidates in the first merge candidate list are ordered based on the costs of the zero motion vector merge candidates in the first merge candidate list. If the zero motion vector merge candidates in the first merge candidate list are ordered in an ascending order of the costs, then the first $G$ zero motion vector merge candidates after the ordering of the zero motion vector merge candidates in the first merge candidate list are determined as the $G$ zero motion vector merge candidates. If the zero motion vector merge candidates in the first merge candidate list are ordered in a descending order of the costs, then the last $G$ zero motion vector merge candidates after the ordering of the zero motion vector merge candidates in the first merge candidate list are determined as the $G$ zero motion vector merge candidates.

Exemplarily, the costs of the zero motion vector merge candidates with different reference picture indexes in the first merge candidate list may be ordered, and then a zero motion vector merge candidate with the minimum template matching cost may be selected. Next, then, the zero motion vector merge candidate with the minimum matching cost and the non-zero motion vector merge candidates in the first merge candidate list are ordered, so as to obtain the second merge candidate list.

In some embodiments, if $M+G$ is less than or equal to $K$, then the first number is determined based on the costs of the zero motion vector merge candidates in the first merge candidate list. $K$ indicates the maximum number of allowed merge candidates in the first merge candidate list.

Exemplarily, $M$ may also be referred to as numOrigMergeCand described above, the first number may also be referred to as numSortMVP described above, i.e., the number of merge candidates participating in the ordering, the maximum number of merge candidates in the first merge candidate list may also be referred to as MaxNumMergeCand, and the total number of zero motion vector merge candidates in the first merge candidate list may also be referred to as numZeroMergeCand. In this case, if numOrigMergeCand+G is less than or equal to MaxNumMergeCand or numZeroMergeCand is greater than or equal to G, then numSortMVP can be determined based on the costs of the zero motion vector merge candidates in the first merge candidate list.

In some embodiments, the operations at S410 may include the following.

The first number is determined based on whether the first merge candidate list includes a zero motion vector merge candidate.

Exemplarily, zero motion vector merge candidates participating in the ordering may be determined based on whether the first merge candidate list includes a zero motion vector merge candidate, and then the first number is determined based on the number of the zero motion vector merge candidates participating in the ordering and the number of non-zero motion vector merge candidates in the first merge candidate list. For example, the sum of the number of the zero motion vector merge candidates participating in the ordering and the number of non-zero motion vector merge candidates in the first merge candidate list can be determined as the first number.

In some embodiments, if $M+J$ is less than or equal to $K$, then $M+J$ is determined as the first number. $M$ indicates the number of merge candidates in the first merge candidate list before addition of the zero motion vector merge candidates, and $J$ is a preset value.

Exemplarily, $M$ may also be referred to as numOrigMergeCand described above, the first number may also be referred to as numSortMVP described above, i.e., the number of merge candidates participating in the ordering, and the maximum number of merge candidates in the first merge candidate list may also be referred to as MaxNumMergeCand. If numOrigMergeCand+J is less than or equal to MaxNumMergeCand or numZeroMergeCand is greater than or equal to $J$, then numSortMVP is set equal to numOrigMergeCand+J. In this case, $J$ zero motion vector merge candidates including the first zero motion vector merge candidate participate in the ordering.

Exemplarily, $J$ is determined according to the number of reference pictures available for the current block and/or $J$ is pre-defined.

Exemplarily, $J$ is equal to the number of reference pictures available for the current block.

Exemplarily, the zero motion vector merge candidates participating in the ordering have different reference picture indexes, and for example, correspond to reference picture indexes 0, 1, 2, and the like.

Since reference picture indexes of the zero motion vector merge candidates filled in the first merge candidate list are not necessarily the same, there are still some differences between the zero motion vector merge candidates filled in the first merge candidate list. Here, $J$ is determined according to the number of reference pictures available for the current block, so that several zero motion vector merge candidates with different reference picture indexes filled in the first merge candidate list can be ordered together with non-zero motion vector merge candidates in the first merge candidate list, which can improve the prediction accuracy of the MV of the current block and thus improve the coding performance of the current block.

Exemplarily, the derivation algorithm for the first number can be implemented as follows.

Input: $M$ (or $M$ and $J$).

Output: the number of merge candidates participating in the ordering, i.e., the first number.

The value of the first number is set to $M+J$. $M$ indicates the number of merge candidates in the first merge candidate list before addition of the zero motion vector merge candidates.

In some embodiments, the method 400 may further include the following.

Whether the first number is determined based on zero motion vector merge candidates in the first merge candidate list is determined.

Exemplarily, if a usage condition for determining the first number based on the zero motion vector merge candidates in the first merge candidate list is satisfied, the first number is determined based on the zero motion vector merge candidates in the first merge candidate list. Otherwise, the first number is determined in other manners.

In some embodiments, whether the first number is determined based on the zero motion vector merge candidates in the first merge candidate list is determined based on a merge mode used for a current block.

Exemplarily, if the merge mode used for the current block satisfies the usage condition for determining the first number based on the zero motion vector merge candidates in the first merge candidate list, the first number is determined based on the zero motion vector merge candidates in the first merge candidate list. Otherwise, the first number is determined in other manners.

In some embodiments, if the merge mode used for the current block is a preset merge mode, it is determined that the first number is determined based on the zero motion vector merge candidates in the first merge candidate list.

Exemplarily, the preset merge mode includes, but is not limited to, a regular merge mode, a TM merge mode, and a BM merge mode. In other alternative embodiments, the preset merge mode may also be another merge mode, which is not limited in the disclosure.

In some embodiments, whether the first number is determined based on the zero motion vector merge candidates in the first merge candidate list is determined based on a size of the current block.

Exemplarily, if the size of the current block satisfies the usage condition for determining the first number based on the zero motion vector merge candidates in the first merge candidate list, the first number is determined based on the zero motion vector merge candidates in the first merge candidate list. Otherwise, the first number is determined in other manners.

In some embodiments, if the size of the current block is a preset size, the first number is determined based on the zero motion vector merge candidates in the first merge candidate list.

Exemplarily, the preset size includes, but is not limited to, a block size greater than or equal to $4\times4$ (or including at least 16 samples), a block size less than or equal to $128\times128$, a block size greater than $4\times4$ and less than $128\times128$. In other alternative embodiments, the preset size may also be another size, which is not limited in the disclosure.

In some embodiments, the first number is the number of merge candidates participating in the ARMC.

Exemplarily, after the first number is determined, ARMC ordering can be performed on merge candidates in the first merge candidate list that participate in the ordering based on the first number, so as to obtain a second merge candidate list. In other alternative embodiments, other technologies can also be used for the ARMC ordering of the merge candidates in the first merge candidate list that participate in the ordering, so as to obtain the second merge candidate list, which is not limited in the disclosure.

In some embodiments, the ARMC refers to the ordering in an ascending order of template matching costs of the merge candidates.

Exemplarily, the template matching cost is an SAD between a template of the current block and a template of a reference block for the merge candidate. Certainly, the matching cost is not limited to the SAD. In order to improve the matching accuracy, the SATD, the SSE, the MSE, or other more complex costs can also be used, which is not limited in the disclosure. For the template of the current block and the templates of the reference blocks, reference can be made to the related contents above, which will not be repeated herein.

According to another aspect of the disclosure, a decoding method is further provided in embodiments of the disclosure. The decoding method includes the following. A first merge candidate list is ordered in the ordering method provided in embodiments of the disclosure, to obtain a second merge candidate list. A bitstream is parsed to obtain a candidate index, where the candidate index indicates an optimal merge candidate of a current block in the second merge candidate list. The current block is predicted based on the optimal merge candidate.

Exemplarily, a decoder parses out the candidate index, i.e., merge _idx[xCb][yCb] corresponding to the optimal merge candidate transmitted in the bitstream, and selects the optimal merge candidate $N$ from the reordered merge candidate list (i.e., the second merge candidate list) according to the candidate index corresponding to the optimal merge candidate. For example, when the current block is a current luma coding block, (xCb, yCb) indicates a location of the current luma coding block, and $N$ = mergeCandList[ merge_idx[ xCb ][ yCb ] ].

According to another aspect of the disclosure, an encoding method is further provided in embodiments of the disclosure. The encoding method includes the following. A first merge candidate list is determined. The first merge candidate list is ordered in the ordering method provided in embodiments of the disclosure, to obtain a second merge candidate list. An optimal merge candidate of the current block is determined based on the second merge candidate list. The optimal merge candidate is encoded.

Exemplarily, an encoder determines a merge candidate with the minimum cost as the optimal merge candidate based on rate-distortion costs of merge candidates in the second merge candidate list.

Exemplarily, the encoder selects the optimal merge candidate from the reordered merge candidate list (i.e., the second merge candidate list) through rate-distortion optimization, and transmits a candidate index corresponding to the optimal merge candidate in a bitstream. For example, the encoder selects from the second merge candidate list an optimal merge candidate with the minimum rate-distortion cost based on a rate-distortion cost of each merge candidate in the second merge candidate list, and transmits a candidate index corresponding to the optimal merge candidate in the bitstream.

It may be understood that, for specific implementations of determining the first merge candidate list in the decoding method and the encoding method, reference can be made to the contents related to operations at S311 in 310 and the contents described above in S320. For specific implementations of predicting the current block by the decoder based on the optimal merge candidate, reference can be made to the contents related to operations at S311 to S315 in 310, which will not be repeated herein.

The preferred embodiments of the disclosure are described in detail above in conjunction with the accompanying drawings. However, this disclosure is not limited to the specific details in the above implementations. Within the technical conception of the disclosure, various simple variants of technical solutions of the disclosure can be made, and these simple variants all fall within the protection scope of the disclosure. For example, each specific technical feature described in the above implementations can be combined in any suitable way without contradiction, and to avoid unnecessary repetition, the various possible combinations are not described separately in the disclosure. For example, various embodiments of the disclosure can also be combined in any way, and as long as they do not contradict the idea of the disclosure, they can also be considered as disclosed in the disclosure. It can also be understood that in the various method embodiments of the disclosure, the numbering of each process mentioned above does not imply the order of execution, and the order of execution of each process shall be determined by its function and inherent logic, which shall not constitute any limitation to the implementation process of the embodiments of the disclosure.

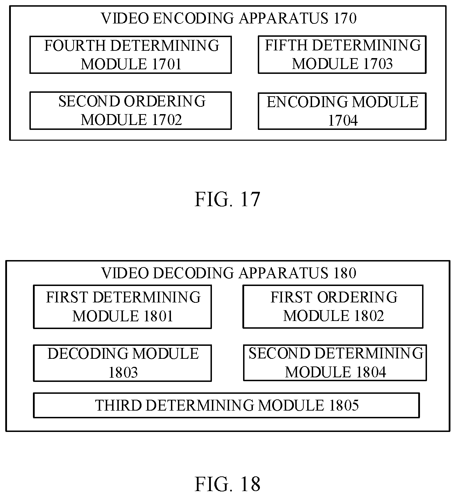

Method embodiments of the disclosure are described in detail above, and apparatus embodiments of the disclosure are described in detail below in connection with FIG. 17 and FIG. 18.

FIG. 17 is a schematic block diagram of a video encoding apparatus 170 provided in embodiments of the disclosure. As illustrated in FIG. 17, the video encoding apparatus 170 includes a fourth determining module 1701, a second ordering module 1702, a fifth determining module 1703, and an encoding module 1704. The fourth determining module 1701 is configured to determine an initial motion information candidate list of a current block. The initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule. The second ordering module 1702 is configured to determine a motion information candidate list of the current block based on ordering partial motion information candidates in the initial motion information candidate list. The partial motion information candidates include at least one first-type motion information candidate and $N$ second-type motion information candidates, and $N$ is a positive integer. The fifth determining module 1703 is configured to determine a motion information candidate index of the current block according to the determined motion information candidate list of the current block. The encoding module 1704 is configured to encode the motion information candidate index of the current block and signal encoded bits into a bitstream.

FIG. 18 is a schematic block diagram of a video decoding apparatus 180 provided in embodiments of the disclosure. As illustrated in FIG. 18, the video decoding apparatus 180 includes a first determining module 1801, a first ordering module 1802, a decoding module 1803, a second determining module 1804, and a third determining module 1805. The first determining module 1801 is configured to determine an initial motion information candidate list of a current block. The initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule. The first ordering module 1802 is configured to determine a motion information candidate list of the current block based on ordering partial motion information candidates in the initial motion information candidate list. The partial motion information candidates include at least one first-type motion information candidate and $N$ second-type motion information candidates, and $N$ is a positive integer. The decoding module 1803 is configured to decode a bitstream to determine a motion information candidate index of the current block. The second determining module 1804 is configured to determine an inter prediction value of the current block according to the motion information candidate index and the motion information candidate list of the current block. The decoding module 1803 is further configured to decode the bitstream to determine a residual value of the current block. The third determining module 1805 is configured to determine a reconstructed value of the current block according to the residual value and the inter prediction value of the current block.

Description of apparatus embodiments is similar to description of method embodiments. The apparatus embodiments have advantages that are similar to those of the method embodiments. For technical details not disclosed in the apparatus embodiments of the disclosure, reference can be made to the method embodiments of the disclosure.

It may be noted that, division of modules in the apparatus described in embodiments of the disclosure is illustrative and is only a division of logical functions, and other manners of division may also be available in practice. In addition, various functional units described in various embodiments of the disclosure may be integrated into one processing unit or may be present as a number of physically separated units, and two or more units may be integrated into one. The integrated unit can be implemented either in the form of hardware or in the form of a software functional unit. The integrated unit can also be implemented by a combination of software and hardware.

It may be noted that in embodiments of the disclosure, if the above method is implemented as a software functional unit and sold or used as a standalone product, it may be stored in a computer-readable storage medium. Based on such an understanding, the essential technical solution of embodiments of the disclosure, or the portion that contributes to the related art may be embodied as software products. The computer software products can be stored in a storage medium and may include multiple instructions that, when executed, can cause an electronic device to execute part or all of the methods described in various embodiments of the disclosure. The above storage medium may include various kinds of media that can store program codes, such as a universal serial bus (USB) flash disk, a mobile hard drive, a read only memory (ROM), a magnetic disk, or an optical disk. There is no particular restriction on the combination of software and hardware in embodiments of the disclosure.

A computer-readable storage medium is provided in embodiments of the disclosure. The computer-readable storage medium is configured to store a computer program which, when executed, is operable to implement the video encoding method or the video decoding method.

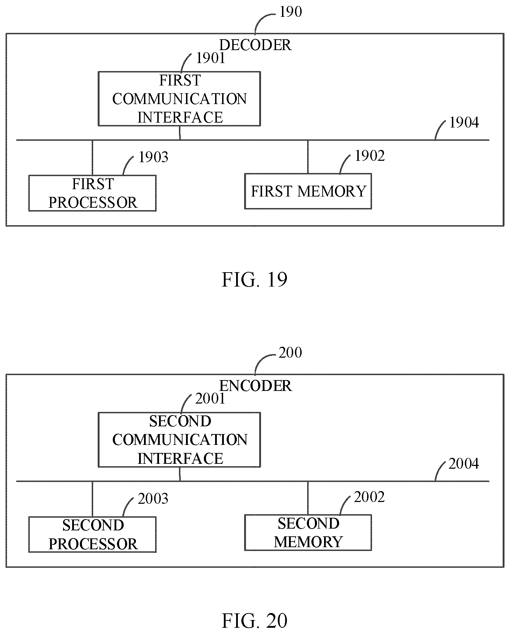

A decoder is provided in embodiments of the disclosure. As illustrated in FIG. 19, the decoder 190 includes a first communication interface 1901, a first memory 1902, and a first processor 1903. The components are coupled together via a first bus system 1904. It may be understood that the first bus system 1904 is configured to enable connection and communication between these components. The first bus system 1904 includes a power bus, a control bus, and a status signal bus in addition to a data bus. For the sake of clarity, however, the various buses are labelled as the first bus system 1904 in FIG. 19.

The first communication interface 1901 is configured to receive and transmit signals during information transmission with other external network elements.

The first memory 1902 is configured to store a computer program executable by the first processor 1903.

The first processor 1903 is configured to, when executing the computer program, determine an initial motion information candidate list of a current block, where the initial motion information candidate list includes first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule; determine a motion information candidate list of the current block based on ordering partial motion information candidates in the initial motion information candidate list, where the partial motion information candidates include at least one first-type motion information candidate and $N$ second-type motion information candidates, and $N$ is a positive integer; decode a bitstream to determine a motion information candidate index of the current block; determine an inter prediction value of the current block according to the motion information candidate index and the motion information candidate list of the current block; decode the bitstream to determine a residual value of the current block; and determine a reconstructed value of the current block according to the residual value and the inter prediction value of the current block.

It will be appreciated that the first memory 1902 in embodiments of the disclosure may be a transitory memory or non-transitory memory, or may include both transitory and non-transitory memory. In particular, the non-transitory memory may be an ROM, a programmable ROM (PROM), an erasable PROM (EPROM), an electrically EPROM (EEPROM), or a flash memory. The transitory memory may be a random access memory (RAM), which is used as an external cache. By way of illustration, but not limitation, many forms of RAM are available, such as a static RAM (SRAM), a dynamic RAM (DRAM), a synchronous DRAM (SDRAM), a double data rate synchronous random access memory (DDRSDRAM), an enhanced SDRAM (ESDRAM), a synchlink DRAM (SLDRAM), and a direct Rambus RAM (DRRAM). The first memory 1902 of the system and method described in this disclosure is intended to include, but is not limited to, these and any other suitable types of memory.

The first processor 1903 may be an integrated circuit chip with signal processing capabilities. During implementation, the operations in the above method may be accomplished by integrated logic circuitry in the hardware of the first processor 1903 or by instructions in the form of software. The first processor 1903 described above may be a general-purpose processor, a digital signal processor (DSP), an application specific integrated circuit (ASIC), a field programmable gate array (FPGA), or other programmable logic device, discrete gate or transistor logic device, discrete hardware component. The various methods, steps and logic block diagrams disclosed in embodiments of the disclosure may be implemented or performed. The general-purpose processor may be a microprocessor or the processor may also be any conventional processor, etc. The operations in the method disclosed in conjunction with embodiments of the disclosure may be performed directly by the hardware decoder processor or by a combination of hardware and software modules in the decoder processor. The software module may be located in a random memory, flash memory, read-only memory, programmable read-only memory or electrically erasable programmable memory, registers and other storage media mature in the art. The storage medium is located in the first memory 1902, and the first processor 1903 reads the information in the first memory 1902 and completes the operations of the above method in combination with its hardware.

It will be appreciated that these embodiments described in this disclosure may be implemented in hardware, software, firmware, middleware, microcode, or combinations thereof. For hardware implementations, the processing unit may be implemented in one or more ASIC, DSP, DSP Device (DSPD), programmable logic device (PLD), FPGA, general-purpose processor, controller, microcontroller, microprocessor, other electronic unit for performing the functions described in this disclosure, or a combination thereof. For software implementations, the technology described in this disclosure may be implemented by means of modules (e.g. procedures, functions, etc.) that perform the functions described in this disclosure. The software code may be stored in a memory and executed by a processor. The memory may be implemented in the processor or outside the processor.

Optionally, as another embodiment, the first processor 1903 is further configured to perform any one of the method embodiments at a decoder 50 side when running the computer program.

An encoder is provided in embodiments of the disclosure. As illustrated in FIG. 20, the encoder 200 includes a second communication interface 2001, a second memory 2002, and a second processor 2003. The components are coupled together via a second bus system 2004. It may be understood that the second bus system 2004 is configured to enable connection and communication between these components. The second bus system 2004 includes a power bus, a control bus, and a status signal bus in addition to a data bus. For the sake of clarity, however, the various buses are labelled as second bus system 2004 in FIG. 20.

The second communication interface 2001 is configured to receive and transmit signals during information transmission with other external network elements.

The second memory 2002 is configured to store a computer program executable by the second processor 2003.

The second processor 2003 is configured to, when running the computer program, order samples in a first picture according to differences between the samples to obtain a first list, and obtain sample values of a first component in a second picture that has the same location coordinates as the samples according to a bit depth of the first component and index numbers of the samples in the first list.

Optionally, as another embodiment, the second processor 2003 is further configured to perform any one of the method embodiments at an encoder 20 side when running the computer program.

It may be understood that, in terms of hardware function, the second memory 2002 is similar to the first memory 1902, and the second processor 2003 is similar to the first processor 1903, which will not be repeated herein.

It may be noted that, description of storage medium embodiments and the apparatus embodiments is similar to description of the method embodiments. The storage medium embodiments and the apparatus embodiments have advantages that are similar to those of the method embodiments. For technical details not disclosed in the storage medium embodiments and the apparatus embodiments, reference can be made to the method embodiments.

A main solution of the present technology:

Step a, a subset of a preset number (denoted as $N$) of zero MVPs are determined from all zero MVPs added during adding zero MVP candidates (1.6) ($N$=1 in the main solution).

Step b, redundancy check is introduced, and whether there is redundancy between an MVP in the zero MVP subset and respective candidates in a merge MVP candidate list before being filled with the zero MVP candidates is determined sequentially. If there is no redundancy, then the number of MVPs in ARMC ordering is increased by 1. In this case, the ARMC ordering is performed on the zero MVP candidate, together with MVP candidates already in the list before being filled with the zero MVPs. If there is redundancy, then the determination continues to be performed on a subsequent zero MVP in the zero MVP subset, until the end.

A redundancy check method can be performed in two ways.

In a first redundancy check method, when an MV value of a candidate MVP is identical to an MV value of a certain MVP candidate already in the MVP list and a reference picture index of the candidate MVP is identical to a reference picture index of the certain MVP candidate, the candidate MVP is considered redundant, and the addition of the candidate is skipped in this case. In a regular merge mode, redundancy check is often performed in this way.

In a second redundancy check method, when an MV of a candidate MVP is very close to an MV of an MVP candidate already in the MVP list, the candidate MVP is considered redundant, and the addition of the candidate is skipped in this case. In a TM merge mode, redundancy check is often performed in this way. A specific embodiment is as follows.

First, a preset threshold is set according to the number $S$ of samples in a current block. For example, when S<64, the threshold is set to 1<<4. When 64<=S<256, the threshold is set to 2<<4. When $S$>=256, the threshold is set to 4<<4.

Meanings of operators:

$x$ << $y$ indicates that $x$ is shifted left by $y$ bits in a binary form, and a most significant bit is shifted out and an empty location of a least significant bit is filled with a zero.

<= indicates being less than or equal to.

< indicates being less than.

>= indicates being greater than or equal to.

Then, in a case where an MVP candidate is bidirectional, when a horizontal difference and a vertical difference between forward MVs as well as a horizontal difference and a vertical difference between backward MVs are all less than the preset threshold, reference picture indexes of the forward MVs are the same, and reference picture indexes of the backward MVs are the same, the candidate is considered redundant and is not added to the candidate list.

In a case where a candidate is unidirectional, when a horizontal difference and a vertical difference between unidirectional MVs are both less than the preset threshold and the reference picture indexes of the unidirectional MVs are the same, the candidate is considered redundant and is not added to the candidate list.

Step c, ARMC ordering is performed according to the finally-determined number of MVP candidates participating in the ARMC ordering.

In order to make full use of the zero MVP candidates filled in the candidate list and improve the prediction accuracy of the MV, the following ARMC improvement method is proposed. Before filling of a zero MVP candidate in the candidate list, if the zero MVP candidate to-be-filled is not redundant with options already in the list, then the first zero MVP candidate filled in the list is used for the ARMC ordering together with previously-added non-zero MVP candidates, so as to obtain a final MVP candidate list. That is, if none of Cand0, Cand1, Cand2, Cand3, and Cand4 is a zero MVP, then the first zero MVP candidate (Cand5) filled in the list needs to be ordered, together with MVP candidates (Cand0, Cand1, Cand2, Cand3, and Cand4) that are added to the front of the list, in an ascending order of template matching costs.

If numOrigMergeCand is less than MaxNumMergeCand (or numZeroMergeCand is greater than 0), redundancy check is performed on the (numOrigMergeCand+1)-th MVP (which may be a constructed zero MVP) candidate in the list.

A redundancy check method can be performed in two ways.

In a first redundancy check method, when an MV value of a candidate MVP is identical to an MV value of a certain MVP candidate already in the MVP list and a reference picture index of the candidate MVP is identical to a reference picture index of the certain MVP candidate, the candidate MVP is considered redundant, and the addition of the candidate is skipped in this case. In a regular merge mode, redundancy check is often performed in this way.

In a second redundancy check method, when an MV of a candidate MVP is very close to an MV of an MVP candidate already in the MVP list, the candidate MVP is considered redundant, and the addition of the candidate is skipped in this case. In a TM merge mode, redundancy check is often performed in this way. A specific embodiment is as follows.

First, a preset threshold is set according to the number $S$ of samples in a current block. For example, when $S<64$, the threshold is set to $1<<4$. When $64<=S<256$, the threshold is set to $2<<4$. When $S>=256$, the threshold is set to $4<<4$.

Meanings of operators:

$x << y$ indicates that $x$ is shifted left by $y$ bits in a binary form, and a most significant bit is shifted out and an empty location of a least significant bit is filled with a zero.

$<=$ indicates being less than or equal to

$<$ indicates being less than

$>=$ indicates being greater than or equal to

Then, in a case where an MVP candidate is bidirectional, when a horizontal difference and a vertical difference between forward MVs as well as a horizontal difference and a vertical difference between backward MVs are all less than the preset threshold, reference picture indexes of the forward MVs are the same, and reference picture indexes of the backward MVs are the same, the candidate is considered redundant and is not added to the candidate list.

In a case where a candidate is unidirectional, when a horizontal difference and a vertical difference between unidirectional MVs are both less than the preset threshold and the reference picture indexes of the unidirectional MVs are the same, the candidate is considered redundant and is not added to the candidate list.

In particular, redundancy check is performed for the (numOrigMergeCand+1)-th MVP with the first numOrigMergeCand MVPs in the MVP list.

If a redundancy condition is satisfied, the variable numSortMVP is set equal to numOrigMergeCand.

If the redundancy condition is not satisfied, the variable numSortMVP is set equal to numOrigMergCand+1.

With the technical solution provided in embodiments of the disclosure, the prediction accuracy of the MV can be improved. By optimizing the ARMC technology, before filling of a zero MVP candidate in the candidate list, if the zero MVP candidate to-be-filled is not redundant with options already in the list, then the first zero MVP candidate filled in the list is used for the ARMC ordering together with previously-added non-zero MVP candidates, so as to obtain a final candidate list. Since a non-ideal case where multiple zero MVP candidates participate in the ARMC ordering is fully considered, and at the same time, the zero MVP candidates added to the merge candidate list have a chance to be ordered in the front of the list based on template matching costs, a zero MVP is more likely to be selected as an optimal MV for post-processing and motion compensation, thereby improving the quality to a certain extent. The method can further improve coding efficiency.

The method further includes extension solutions 1 to 7 below.

In extension solution 1, extension of the number of zero vectors participating in the ARMC ordering in the main solution is as follows.

In an implementation of the main solution, the first zero MVP candidate among zero MVP candidates filled in the merge candidate list is selected for the ARMC ordering together with non-zero MVP candidates in the front of the list. Since reference picture indexes of the zero MVP candidates filled in the candidate list are not necessarily the same, there are still some differences between the zero MVP candidates filled in the list. Here, the number of zero MVP candidates participating in the ARMC ordering is extended to $N$, and $N$ may be a number greater than 1.

Several zero MVP candidates with different reference picture indexes filled in the merge candidate list are selected for the ARMC ordering together with the non-zero MVP candidates in the front of the list, so as to obtain a final merge candidate list. In this case, the reference picture indexes of the involved zero MVPs are different, which correspond to reference picture indexes 0, 1, and/or 2, etc.

Further, in some embodiments, the number numSortMVP of candidates participating in the ARMC ordering can be derived. If numOrigMergCand+N is less than or equal to MaxNumMergeCand (or numZeroMergeCand is greater than or equal to N), then redundancy check is performed on the (numOrigMergeCand+N)-th MVP (which may be a constructed zero MVP) vector in the list. In particular, redundancy check is performed for the (numOrigMergeCand+N)-th MVP with the first numOrigMergeCand+N-1 MVPs in the MVP list.

If a redundancy condition is satisfied, the variable numSortMVP is set equal to numOrigMergeCand+N-1.

If the redundancy condition is not satisfied, the variable numSortMVP is set equal to numOrigMergeCand+N.

In extension solution 2, optimization of adding the zero vectors to the merge MVP candidate list in the main solution is as follows.

In the main solution, zero MV vectors with reference indexes Idx of 0, 1, and 2 are sequentially added to the merge MVP list. This extension solution optimizes the addition of zero MVP vectors. A specific optimization algorithm is as follows. First, ARMC ordering is performed on those zero MVP candidates with different reference picture indexes filled at the end of the candidate list based on template matching costs. Then, a zero MVP candidate with the minimum template matching cost is selected, and ARMC ordering is performed on the zero MVP candidate with the minimum matching cost and MVP candidates in the front of the list, so as to obtain a final merge candidate list.

In extension solution 3, extension of redundancy check is as follows.

In the main solution, redundancy check is needed for a zero MVP candidate to-be-involved in the ARMC with candidates in the list before being filled with a zero MVP. If there is no redundancy, the zero MVP candidate can participate in the ARMC ordering. In an implementation of this extension solution, redundancy check is skipped as follows.

In this case, deriving the number numSortMVP of candidates participating in the ARMC ordering is directly changed to: deriving the number numSortMVP of candidates participating in the ARMC ordering as follows.

If numOrigMergeCand+N is less than or equal to MaxNumMergeCand (or numZeroMergeCand is greater than or equal to N), the variable numSortMVP is set equal to numOrigMergeCand+N. In this case, ARMC ordering is directly performed on MVPs including the first zero MVP.

In extension solution 4, extension of redundancy check is as follows.

The redundancy check of the zero MVP candidate added at S516 illustrated in FIG. 15 can also be simplified as follows. Regardless of a value of a reference picture index, as long as two components MVx and MVy of an MV candidate already in a certain list are both 0, it is considered that a zero MVP candidate already exists, and subsequently, the zero MVP candidate does not need to be added to participate in the ARMC ordering.

In extension solution 5, each of the main solution, extension solution 1, and extension solution 2 can be selectively combined with one of extension solution 3 and extension solution 4.

In extension solution 6, a condition for the filled zero MVP to participate in the ARMC in the main solution can be made much stricter, which, for example, is used only for some merge modes, or is used only for regular merge and/or TM merge and/or BM merge.

This condition can also limit a block size, and is used only for a block satisfying a preset-size condition, for example, only for a block with a block size greater than $4 \times 4$ (or including at least 16 samples), or only for a block with a block size less than $128 \times 128$, or only for a block with a block size greater than $4 \times 4$ and less than $128 \times 128$, etc.

In extension solution 7, the main solution can also be carried out in the following order, as illustrated in FIG. 16.

During construction of a merge list, in terms of adding a zero MVP candidate(s), the first zero MVP candidate is added, and then redundancy check is performed for the zero MVP candidate with candidates added to the list before the zero MVP candidate. If the zero MVP candidate is non-redundant, the number of candidates participating in the ARMC is increased by 1. If the zero MVP candidate is redundant, the number of candidates participating in the ARMC is still the value before addition of the zero MVP candidate. Finally, other zero MVP candidates continue to be added. After completing the above operations, operations at S311 in FIG. 3 are invoked to carry out the ARMC operation.

It may be understood that the phrase "one embodiment", "an embodiment", or "some embodiments" means that the particular features, structures, or characteristics related to embodiments are included in at least one embodiment. Therefore, the phrase "in one embodiment", "in an implementation", or "in some embodiments" appearing in various places of the specification does not necessarily refer to the same embodiment. In addition, these particular features, structures, or characteristics may be combined in any proper manner in one or more embodiment. It may be understood that, in various embodiments of the disclosure, the sequence numbers of various processes described above do not mean the order of execution. Instead, the order of execution of each process may be determined by its function and internal logic and may not be taken as limitations of embodiments. The sequence numbers of the embodiment of the disclosure are merely for description and do not represent the advantages and disadvantages of the embodiment. The above description of the various embodiments tends to emphasize the differences between the various embodiments, and for the same or similar part of the various embodiments, reference can be made to each other, which will not be repeated herein for the sake of brevity.

The term "and/or" herein only describes an association relationship between associated objects, which means that there can be three relationships. For example, object A and/or object B can mean object A alone, both object A and object B exist, and object B alone.

It may be understood that the term "include", "comprise", or any other variants thereof is intended to encompass a non-exclusive inclusion, such that a process, method, article, or device including a series of elements includes not only those elements but also other elements that are not explicitly listed, or elements that are inherent to such a process, method, article, or device. An element that is defined by the phrase "including a ..." does not exclude the presence of additional equivalent elements in the process, method, item, or device that includes the element.

It will be appreciated that the apparatuses and methods disclosed in embodiments of the disclosure may also be implemented in various other manners. The above embodiments are merely illustrative, e.g., the division of modules is only a division of logical functions, and there may exist other manners of division in practice, e.g., multiple modules or assemblies may be combined or may be integrated into another system, or some features may be ignored or skipped. In other respects, the coupling or direct coupling or communication connection as illustrated or discussed may be an indirect coupling or communication connection through some interface, device or module, and may be electrical, mechanical, or otherwise.

Separated modules as illustrated may or may not be physically separated. Components displayed as modules may or may not be physical modules, and may reside at one location or may be distributed to multiple networked units. Some or all of the modules may be selectively adopted according to practical needs to achieve desired objectives of the embodiments.

Additionally, various functional modules described in embodiments of the disclosure may be integrated into one processing unit or may be present as a number of physically separated modules, and two or more modules may be integrated into one. The integrated module may take the form of hardware or hardware plus software functional unit.

It will be understood by those skilled in the art that all or part of the steps of implementing the foregoing method embodiments may be performed by hardware related to program instructions. The programs may be stored in a computer readable storage medium, and when executed, the programs perform operations including the foregoing method embodiments. The storage medium includes various kinds of media which can store program codes, such as a portable storage device, an ROM, a magnetic disk, an optical disk, and the like.

If the integrated units are implemented as software functional units and sold or used as standalone products, they may be stored in a computer-readable storage medium. Based on such an understanding, the essential technical solution of embodiments of the disclosure or the portion that contributes to the related art may be embodied as software products. The computer software products can be stored in a storage medium and may include multiple instructions that, when executed, can cause the electronic device to execute some or all operations of the methods described in various embodiments. The above storage medium may include various kinds of media that can store program codes, such as a portable storage device, an ROM, a magnetic disk, an optical disk, and the like.

The methods disclosed in several method embodiments provided by the disclosure can be arbitrarily combined without conflict to obtain new method embodiments.

The features disclosed in several product embodiments provided by the disclosure can be arbitrarily combined without conflict to obtain new product embodiments.

The features disclosed in several methods or apparatus embodiments provided by the disclosure can be arbitrarily combined without conflict to obtain new method or apparatus embodiments.

While the disclosure has been described in connection with certain implementations, it is to be understood that the disclosure is not to be limited to the disclosed implementations but, on the contrary, is intended to cover various modifications and equivalent arrangements included within the scope of the appended claims, which scope is to be accorded the broadest interpretation so as to encompass all such modifications and equivalent structures as is permitted under the law.

**Claims**

1. A video decoding method, applied to a decoder and comprising:

determining an initial motion information candidate list of a current block, wherein the initial motion information candidate list comprises first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule;

determining a motion information candidate list of the current block based on ordering partial motion information candidates in the initial motion information candidate list, wherein the partial motion information candidates comprise at least one first-type motion information candidate and $N$ second-type motion information candidates, and $N$ is a positive integer;

decoding a bitstream to determine a motion information candidate index of the current block;

determining an inter prediction value of the current block according to the motion information candidate index and the motion information candidate list of the current block;

decoding the bitstream to determine a residual value of the current block; and

determining a reconstructed value of the current block according to the residual value and the inter prediction value of the current block.

**2.** The method of claim 1, wherein
two components of the motion vector of the preset value both take a value of 0.

**3.** The method of claim 1, wherein
the *N* second-type motion information candidates in the partial motion information candidates are *N* second-type motion information candidates that are sequentially added to the initial motion information candidate list during construction of the initial motion information candidate list.

**4.** The method of claim 3, wherein
the *N* second-type motion information candidates in the partial motion information candidates are *N* second-type motion information candidates that are ordered after the first-type motion information candidates in the initial motion information candidate list.

**5.** The method of claim 3, wherein
the partial motion information candidates comprise all the first-type motion information candidates in the initial motion information candidate list.

**6.** The method of claim 1, wherein *N* is a preset value.

**7.** The method of claim 6, wherein a value of *N* is 1, 2, or 3.

**8.** The method of claim 6, wherein a value of *N* is less than or equal to a number of allowed reference pictures.

**9.** The method of claim 6, wherein a value of *N* is less than a number of the second-type motion information candidates in the initial motion information candidate list.

**10.** The method of claim 1, wherein

the *N* second-type motion information candidates in the partial motion information candidates are second-type motion information candidates in the initial motion information candidate list that do not satisfy a first condition; or
the *N* second-type motion information candidates in the partial motion information candidates are second-type motion information candidates in the initial motion information candidate list that satisfy a second condition.

**11.** The method of claim 10, wherein the first condition is that a motion vector of the second-type motion information candidate is equal to a motion vector of the first-type motion information candidate and a reference picture index of the second-type motion information candidate is equal to a reference picture index of the first-type motion information candidate.

**12.** The method of claim 10, wherein the first condition is that the second-type motion information candidate is close to the first-type motion information candidate in the partial motion information candidates, comprising:
a reference picture index of the second-type motion information candidate being equal to a reference picture index of the first-type motion information candidate, and at least one of the following conditions being satisfied:

an absolute value of a difference between a vertical component of a motion vector of the second-type motion information candidate and a vertical component of a motion vector of the first-type motion information candidate being less than a first threshold; or
an absolute value of a difference between a horizontal component of the motion vector of the second-type motion information candidate and a horizontal component of the motion vector of the first-type motion information candidate being less than a second threshold.

**13.** The method of claim 10, wherein the second-type motion information candidate satisfying the second condition comprises:
a first one of the second-type motion information candidates in a new order, after adaptive reordering of the second-type motion information candidates in the initial motion information candidate list.

**14.** The method of claim 10, wherein the second-type motion information candidate satisfying the second condition comprises:
a second-type motion information candidate with a minimum template matching error in the initial motion information candidate list.

15. The method of claim 1, wherein

   the current block at least comprises a first number of samples; or
   a size of the current block satisfies a third condition preset.

16. The method of claim 15, wherein
   the first number is 16.

17. The method of claim 15, wherein
   the third condition is that a width and a height of the current block are less than or equal to a first preset size.

18. The method of claim 17, wherein
   the first preset size is 128×128.

19. The method of claim 15, wherein
   the third condition is that a width and a height of the current block are greater than or equal to a second preset size.

20. The method of claim 19, wherein
   the second preset size is 4×4.

21. The method of claim 15, wherein
   the third condition is that a width and a height of the current block are less than or equal to a first preset size and the width and the height of the current block are greater than or equal to a second preset size.

22. The method of claim 21, wherein
   the first preset size is 128×128, and the second preset size is 4×4.

23. The method of claim 1, wherein determining the motion information candidate list of the current block based on ordering the partial motion information candidates in the initial motion information candidate list comprises:

   determining template matching errors of the partial motion information candidates; and
   ordering the partial motion information candidates according to the template matching errors.

24. The method of claim 23, wherein determining the template matching errors of the partial motion information candidates comprises:

   determining a template of the current block;
   determining, according to motion vectors of the partial motion information candidates, corresponding templates of the template in reference pictures indicated by reference picture indexes of the partial motion information candidates; and
   determining the template matching errors according to the template and the corresponding templates.

25. The method of claim 24, wherein determining the template matching errors according to the template and the corresponding templates comprises:
   calculating errors between the template and the corresponding templates according to an error criterion preset.

26. The method of claim 25, wherein
   the error criterion is one of: sum of absolute differences (SAD), sum of absolute transformed differences (SATD), mean square error (MSE), and sum of squared differences (SSD).

27. The method of claim 25, wherein
   the error criterion is one of: peak signal-to-noise ratio (PSNR) and structural similarity (SSIM).

28. The method of claim 23 or 26, wherein ordering the partial motion information candidates according to the template matching errors comprises:
   ordering the partial motion information candidates in an ascending order of the template matching errors.

**EP 4 550 790 A1**

29. The method of claim 23 or 27, wherein ordering the partial motion information candidates according to the template matching errors comprises:
ordering the partial motion information candidates in a descending order of the template matching errors.

30. The method of claim 23, wherein
the partial motion information candidates are $M$ motion information candidates, and $M$ is an integer greater than 1.

31. The method of claim 30, wherein determining the motion information candidate list of the current block comprises:
determining motion information candidate indexes corresponding to the ordered partial motion information candidates in the motion information candidate list of the current block as 0 to $M$ - 1.

32. The method of claim 31, further comprising:
determining other motion information candidates in the motion information candidate list of the current block except the ordered partial motion information candidates.

33. The method of claim 32, wherein motion information candidate indexes corresponding to the unordered other motion information candidates or the ordered other motion information candidates in the motion information candidate list of the current block are greater than the motion information candidate indexes corresponding to the ordered partial motion information candidates.

34. The method of claim 33, further comprising:
ordering the other motion information candidates by using a same method for ordering the partial motion information candidates.

35. A video encoding method, applied to an encoder and comprising:

determining an initial motion information candidate list of a current block, wherein the initial motion information candidate list comprises first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule;
determining a motion information candidate list of the current block based on ordering partial motion information candidates in the initial motion information candidate list, wherein the partial motion information candidates comprise at least one first-type motion information candidate and $N$ second-type motion information candidates, and $N$ is a positive integer;
determining a motion information candidate index of the current block according to the determined motion information candidate list of the current block; and
encoding the motion information candidate index of the current block and signalling encoded bits into a bitstream.

36. The method of claim 35, wherein
two components of the motion vector of the preset value both take a value of 0.

37. The method of claim 35, wherein
the $N$ second-type motion information candidates in the partial motion information candidates are $N$ second-type motion information candidates that are sequentially added to the initial motion information candidate list during construction of the initial motion information candidate list.

38. The method of claim 37, wherein
the $N$ second-type motion information candidates in the partial motion information candidates are $N$ second-type motion information candidates that are ordered after the first-type motion information candidates in the initial motion information candidate list.

39. The method of claim 37, wherein
the partial motion information candidates comprise all the first-type motion information candidates in the initial motion information candidate list.

40. The method of claim 35, wherein $N$ is a preset value.

**41.** The method of claim 40, wherein a value of *N* is 1, 2, or 3.

**42.** The method of claim 40, wherein a value of *N* is less than or equal to a number of allowed reference pictures.

**43.** The method of claim 40, wherein a value of *N* is less than a number of the second-type motion information candidates in the initial motion information candidate list.

**44.** The method of claim 35, wherein

the *N* second-type motion information candidates in the partial motion information candidates are second-type motion information candidates in the initial motion information candidate list that do not satisfy a first condition; or the *N* second-type motion information candidates in the partial motion information candidates are second-type motion information candidates in the initial motion information candidate list that satisfy a second condition.

**45.** The method of claim 44, wherein the first condition is that a motion vector of the second-type motion information candidate is equal to a motion vector of the first-type motion information candidate and a reference picture index of the second-type motion information candidate is equal to a reference picture index of the first-type motion information candidate.

**46.** The method of claim 44, wherein the first condition is that the second-type motion information candidate is close to the first-type motion information candidate in the partial motion information candidates, comprising a reference picture index of the second-type motion information candidate being equal to a reference picture index of the first-type motion information candidate, and at least one of the following conditions being satisfied:

an absolute value of a difference between a vertical component of a motion vector of the second-type motion information candidate and a vertical component of a motion vector of the first-type motion information candidate being less than a first threshold; or an absolute value of a difference between a horizontal component of the motion vector of the second-type motion information candidate and a horizontal component of the motion vector of the first-type motion information candidate being less than a second threshold.

**47.** The method of claim 44, wherein the second-type motion information candidate satisfying the second condition comprises: a first one of the second-type motion information candidates in a new order, after adaptive reordering of the second-type motion information candidates in the initial motion information candidate list.

**48.** The method of claim 44, wherein the second-type motion information candidate satisfying the second condition comprises: a second-type motion information candidate with a minimum template matching error in the initial motion information candidate list.

**49.** The method of claim 35, wherein

the current block at least comprises a first number of samples; or a size of the current block satisfies a third condition preset.

**50.** The method of claim 49, wherein the first number is 16.

**51.** The method of claim 49, wherein the third condition is that a width and a height of the current block are less than or equal to a first preset size.

**52.** The method of claim 51, wherein the first preset size is 128×128.

**53.** The method of claim 49, wherein the third condition is that a width and a height of the current block are greater than or equal to a second preset size.

**54.** The method of claim 53, wherein
the second preset size is 4×4.

**55.** The method of claim 49, wherein
the third condition is that a width and a height of the current block are less than or equal to a first preset size and the width and the height of the current block are greater than or equal to a second preset size.

**56.** The method of claim 55, wherein
the first preset size is 128×128, and the second preset size is 4×4.

**57.** The method of claim 35, wherein determining the motion information candidate list of the current block based on ordering the partial motion information candidates in the initial motion information candidate list comprises:

determining template matching errors of the partial motion information candidates; and
ordering the partial motion information candidates according to the template matching errors.

**58.** The method of claim 57, wherein determining the template matching errors of the partial motion information candidates comprises:

determining a template of the current block;
determining, according to motion vectors of the partial motion information candidates, corresponding templates of the template in reference pictures indicated by reference picture indexes of the partial motion information candidates; and
determining the template matching errors according to the template and the corresponding templates.

**59.** The method of claim 58, wherein determining the template matching errors according to the template and the corresponding templates comprises:
calculating errors between the template and the corresponding templates according to an error criterion preset.

**60.** The method of claim 59, wherein
the error criterion is one of: sum of absolute differences (SAD), sum of absolute transformed differences (SATD), mean square error (MSE), and sum of squared differences (SSD).

**61.** The method of claim 59, wherein
the error criterion is one of: peak signal-to-noise ratio (PSNR) and structural similarity (SSIM).

**62.** The method of claim 57 or 60, wherein ordering the partial motion information candidates according to the template matching errors comprises:
ordering the partial motion information candidates in an ascending order of the template matching errors.

**63.** The method of claim 57 or 60, wherein ordering the partial motion information candidates according to the template matching errors comprises:
ordering the partial motion information candidates in a descending order of the template matching errors.

**64.** The method of claim 57, wherein
the partial motion information candidates are $M$ motion information candidates, and $M$ is an integer greater than 1.

**65.** The method of claim 64, wherein determining the motion information candidate list of the current block comprises:
determining motion information candidate indexes corresponding to the ordered partial motion information candidates in the motion information candidate list of the current block as 0 to $M$ - 1.

**66.** The method of claim 65, further comprising:
determining other motion information candidates in the motion information candidate list of the current block except the ordered partial motion information candidates.

**67.** The method of claim 66, wherein motion information candidate indexes corresponding to the unordered other motion information candidates or the ordered other motion information candidates in the motion information candidate list of the current block are greater than the motion information candidate indexes corresponding to the ordered partial motion information candidates.

68. The method of claim 67, further comprising:
ordering the other motion information candidates by using a same method for ordering the partial motion information candidates.

69. A video decoding apparatus, applied to a decoder and comprising a first determining module, a first ordering module, a decoding module, a second determining module, and a third determining module, wherein

the first determining module is configured to determine an initial motion information candidate list of a current block, wherein the initial motion information candidate list comprises first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule;
the first ordering module is configured to determine a motion information candidate list of the current block based on ordering partial motion information candidates in the initial motion information candidate list, wherein the partial motion information candidates comprise at least one first-type motion information candidate and $N$ second-type motion information candidates, and $N$ is a positive integer;
the decoding module is configured to decode a bitstream to determine a motion information candidate index of the current block;
the second determining module is configured to determine an inter prediction value of the current block according to the motion information candidate index and the motion information candidate list of the current block;
the decoding module is further configured to decode the bitstream to determine a residual value of the current block; and
the third determining module is configured to determine a reconstructed value of the current block according to the residual value and the inter prediction value of the current block.

70. A video encoding apparatus, applied to an encoder and comprising:

a fourth determining module configured to determine an initial motion information candidate list of a current block, wherein the initial motion information candidate list comprises first-type motion information candidates and second-type motion information candidates, the first-type motion information candidates are determined according to motion information of a neighbouring block and/or a non-neighbouring block of the current block, and the second-type motion information candidates are constructed according to a motion vector of a preset value and a reference picture index set by using a preset rule;
a second ordering module configured to determine a motion information candidate list of the current block based on ordering partial motion information candidates in the initial motion information candidate list, wherein the partial motion information candidates comprise at least one first-type motion information candidate and $N$ second-type motion information candidates, and $N$ is a positive integer;
a fifth determining module configured to determine a motion information candidate index of the current block according to the determined motion information candidate list of the current block; and
an encoding module configured to encode the motion information candidate index of the current block and signal encoded bits into a bitstream.

71. A decoder, comprising a first memory and a first processor, wherein

the first memory is configured to store a computer program executable by the first processor; and
the first processor is configured to perform the video decoding method of any one of claims 1 to 34 when executing the computer program.

72. An encoder, comprising a second memory and a second processor, wherein

the second memory is configured to store a computer program executable by the second processor; and
the second processor is configured to perform the video encoding method of any one of claims 35 to 68 when executing the computer program.

73. A bitstream generated by encoding a motion information candidate index of a current block into bits, wherein the motion information candidate index of the current block is obtained according to the method of any one of claims 35 to 68.

74. An electronic device, comprising:

a processor adapted to execute a computer program; and
a computer-readable storage medium storing the computer program which, when executed by the processor, is operable to implement the video decoding method of any one of claims 1 to 34 or the video encoding method of any one of claims 35 to 68.

75. A computer-readable storage medium storing a computer program which, when executed, is operable to implement the video decoding method of any one of claims 1 to 34 or the video encoding method of any one of claims 35 to 68.

FIG. 1

FIG. 2

310

```
┌─────────────────────────────┐
│   CONSTRUCT MERGE           │ S311
│   CANDIDATE LIST            │
└─────────────────────────────┘
              │
┌─────────────────────────────────────────┐
│ REORDER MERGE CANDIDATE LIST WITH ARMC   │ S312
│ TECHNOLOGY                               │
└─────────────────────────────────────────┘
              │
┌─────────────────────────────────────────┐
│ SELECT OPTIMAL MERGE CANDIDATE ACCORDING TO │ S313
│ CANDIDATE INDEX PARSED BY DECODER SIDE      │
└─────────────────────────────────────────┘
              │
┌─────────────────────────────────────────┐
│ REFINE OPTIMAL MERGE CANDIDATE WITH TM TECHNOLOGY │ S314
│ OR MULTI-PASS DMVR TECHNOLOGY                     │
└─────────────────────────────────────────┘
              │
┌─────────────────────────────────────────┐
│ PREDICT CURRENT BLOCK BY USING           │ S315
│ REFINED OPTIMAL MERGE CANDIDATE          │
└─────────────────────────────────────────┘
```

FIG. 3

320

```
┌─────────────────────────────┐
│ ADD SPATIAL MERGE           │ S321
│ CANDIDATE                   │
└─────────────────────────────┘
              │
┌─────────────────────────────┐
│ ADD TEMPORAL MERGE          │ S322
│ CANDIDATE                   │
└─────────────────────────────┘
              │
┌─────────────────────────────┐
│ ADD NON-NEIGHBOURING        │ S323
│ SPATIAL MERGE CANDIDATE     │
└─────────────────────────────┘
              │
┌─────────────────────────────┐
│ ADD HISTORY-BASED MERGE     │ S324
│ CANDIDATE                   │
└─────────────────────────────┘
              │
┌─────────────────────────────┐
│ ADD PAIRWISE AVERAGE        │ S325
│ MERGE CANDIDATE             │
└─────────────────────────────┘
              │
┌─────────────────────────────┐
│ ADD ZERO MERGE CANDIDATE    │ S326
└─────────────────────────────┘
```

FIG. 4

FIG. 5

CURRENT CODING
BLOCK

FIG. 6

FIG. 7

FIG. 8

FIG. 9

FIG. 10

MERGE CANDIDATE 0               MERGE CANDIDATE 0
MERGE CANDIDATE 1               MERGE CANDIDATE 5
MERGE CANDIDATE 2               MERGE CANDIDATE 6
MERGE CANDIDATE 3               MERGE CANDIDATE 7
MERGE CANDIDATE 4               MERGE CANDIDATE 8
MERGE CANDIDATE 5               MERGE CANDIDATE 9
MERGE CANDIDATE 6               MERGE CANDIDATE 1

ZERO MERGE CANDIDATES

MERGE CANDIDATE 7               MERGE CANDIDATE 2
MERGE CANDIDATE 8               MERGE CANDIDATE 4
MERGE CANDIDATE 9               MERGE CANDIDATE 3

ARMC MODULE

FIG. 11

MERGE CANDIDATE 0               MERGE CANDIDATE 0
MERGE CANDIDATE 1               MERGE CANDIDATE 1
MERGE CANDIDATE 2               MERGE CANDIDATE 2
MERGE CANDIDATE 3               MERGE CANDIDATE 4
MERGE CANDIDATE 4               MERGE CANDIDATE 3

MERGE CANDIDATE 5               MERGE CANDIDATE 5
MERGE CANDIDATE 6               MERGE CANDIDATE 6

ZERO MERGE CANDIDATES

MERGE CANDIDATE 7               MERGE CANDIDATE 7
MERGE CANDIDATE 8               MERGE CANDIDATE 8
MERGE CANDIDATE 9               MERGE CANDIDATE 9

ARMC MODULE

FIG. 12

400

| DETERMINE FIRST NUMBER OF MERGE CANDIDATES IN FIRST MERGE CANDIDATE LIST THAT PARTICIPATE IN ORDERING BASED ON ZERO MOTION VECTOR MERGE CANDIDATES IN FIRST MERGE CANDIDATE LIST | S410 |
|---|---|
| ORDER MERGE CANDIDATES IN FIRST MERGE CANDIDATE LIST BASED ON FIRST NUMBER | S420 |

FIG. 13

MERGE CANDIDATE 0      MERGE CANDIDATE 0
MERGE CANDIDATE 1      MERGE CANDIDATE 5
MERGE CANDIDATE 2      MERGE CANDIDATE 1
MERGE CANDIDATE 3      MERGE CANDIDATE 2
MERGE CANDIDATE 4      MERGE CANDIDATE 4

ZERO MERGE CANDIDATES

MERGE CANDIDATE 5      MERGE CANDIDATE 3
MERGE CANDIDATE 6      MERGE CANDIDATE 6
MERGE CANDIDATE 7      MERGE CANDIDATE 7
MERGE CANDIDATE 8      MERGE CANDIDATE 8
MERGE CANDIDATE 9      MERGE CANDIDATE 9

ARMC MODULE

FIG. 14

<u>510</u>

add a spatial merge candidate — S511

↓

add a temporal merge candidate — S512

↓

add a non-neighbouring spatial merge candidate — S513

↓

add a history-based merge candidate — S514

↓

add a pairwise average merge candidate — S515

↓

add a zero merge candidate — S516

↓

whether the first zero merge candidate added is redundant with merge candidates in a first merge candidate list before addition of the first zero merge candidate — S517

YES →

set the number of merge candidates participating in the ordering equal to the number of merge candidates in the first merge candidate list before addition of the first zero merge candidate — S518

NO ↓

set the number of merge candidates participating in the ordering equal to the number of merge candidates in the first merge candidate list before addition of the first zero merge candidate plus 1 — S519

FIG. 15

520

add a spatial merge candidate ⟶ S521

↓

add a temporal merge candidate ⟶ S522

↓

add a non-neighbouring spatial merge candidate ⟶ S523

↓

add a history-based merge candidate ⟶ S524

↓

add a pairwise average merge candidate ⟶ S525

↓

add the first zero merge candidate ⟶ S526

↓

whether the first zero merge candidate added is redundant with merge candidates in a first merge candidate list before addition of the first zero merge candidate ⟶ S527

YES ⟶ set the number of merge candidates participating in the ordering equal to the number of merge candidates in the first merge candidate list before addition of the first zero merge candidate ⟶ S528

NO ↓

set the number of merge candidates participating in the ordering equal to the number of merge candidates in the first merge candidate list before addition of the first zero merge candidate plus 1 ⟶ S529

↓

continue to add a zero merge candidate ⟶ S530

FIG. 16

VIDEO ENCODING APPARATUS 170

| FOURTH DETERMINING MODULE 1701 | FIFTH DETERMINING MODULE 1703 |
|---|---|
| SECOND ORDERING MODULE 1702 | ENCODING MODULE 1704 |

FIG. 17

VIDEO DECODING APPARATUS 180

| FIRST DETERMINING MODULE 1801 | FIRST ORDERING MODULE 1802 |
|---|---|
| DECODING MODULE 1803 | SECOND DETERMINING MODULE 1804 |
| THIRD DETERMINING MODULE 1805 | |

FIG. 18

190

DECODER

1901

FIRST
COMMUNICATION
INTERFACE

1904

1903

1902

FIRST
PROCESSOR

FIRST MEMORY

FIG. 19

200

ENCODER

2001

SECOND
COMMUNICATION
INTERFACE

2004

2003

2002

SECOND
PROCESSOR

SECOND
MEMORY

FIG. 20

## INTERNATIONAL SEARCH REPORT

| | International application No. |
|---|---|
| | **PCT/CN2022/114609** |

**A. CLASSIFICATION OF SUBJECT MATTER**

H04N19/52(2014.01)i;H04N19/513(2014.01)i;H04N19/70(2014.01)i;H04N19/105(2014.01)i

According to International Patent Classification (IPC) or to both national classification and IPC

**B. FIELDS SEARCHED**

Minimum documentation searched (classification system followed by classification symbols)

H04N19/-

Documentation searched other than minimum documentation to the extent that such documents are included in the fields searched

Electronic data base consulted during the international search (name of data base and, where practicable, search terms used)

CNTXT; CNABS; CNTXTC; CNKI: 运动矢量, 参考图像索引, 自适应, 排序, 零运动矢量, 冗余, 阈值, 设定值, 预设值, 帧间预测, 尺度, 模板, 匹配误差, 预测; VEN; ENTXT; IEEE: motion vector, temple match+ , predict+, inter-frame, zero, redundancy, size, value predeterm+, number, sort+, rank+

**C. DOCUMENTS CONSIDERED TO BE RELEVANT**

| Category* | Citation of document, with indication, where appropriate, of the relevant passages | Relevant to claim No. |
|---|---|---|
| X | CN 113228676 A (INTERDIGITAL VC HOLDINGS, INC.) 06 August 2021 (2021-08-06) description, paragraphs 59-148, and figures 1-21 | 1, 3-9, 15-22, 35, 37-43, 49-56, 69-75 |
| Y | CN 113228676 A (INTERDIGITAL VC HOLDINGS, INC.) 06 August 2021 (2021-08-06) description, paragraphs 59-148, and figures 1-21 | 23-34, 57-68 |
| Y | US 2020162743 A1 (LG ELECTRONICS INC.) 21 May 2020 (2020-05-21) description, paragraphs 48-309 | 23-34, 57-68 |
| A | US 2022116652 A1 (LG ELECTRONICS INC.) 14 April 2022 (2022-04-14) entire document | 1-75 |
| A | CN 113709499 A (HANGZHOU HIKVISION DIGITAL TECHNOLOGY CO., LTD.) 26 November 2021 (2021-11-26) entire document | 1-75 |
| A | CN 110572645 A (BEIJING BYTEDANCE NETWORK TECHNOLOGY CO., LTD. et al.) 13 December 2019 (2019-12-13) entire document | 1-75 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 February 2023** | **21 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/114609**

| Patent document cited in search report | | | Publication date (day/month/year) | Patent family member(s) | | | Publication date (day/month/year) |
|---|---|---|---|---|---|---|---|
| CN | 113228676 | A | 06 August 2021 | EP | 3888371 | A2 | 06 October 2021 |
| | | | | US | 2021266586 | A1 | 26 August 2021 |
| | | | | US | 11490112 | B2 | 01 November 2022 |
| | | | | JP | 2022510878 | A | 28 January 2022 |
| | | | | WO | 2020112620 | A2 | 04 June 2020 |
| | | | | WO | 2020112620 | A3 | 30 July 2020 |
| US | 2020162743 | A1 | 21 May 2020 | US | 11082702 | B2 | 03 August 2021 |
| | | | | WO | 2019009498 | A1 | 10 January 2019 |
| US | 2022116652 | A1 | 14 April 2022 | CA | 3145240 | A1 | 30 December 2020 |
| | | | | JP | 2022539521 | A | 12 September 2022 |
| | | | | WO | 2020262914 | A1 | 30 December 2020 |
| | | | | KR | 20210158399 | A | 30 December 2021 |
| | | | | IN | 202217002902 | A | 25 March 2022 |
| | | | | VN | 85079 | A | 25 March 2022 |
| CN | 113709499 | A | 26 November 2021 | None | | | |
| CN | 110572645 | A | 13 December 2019 | TW | 202013958 | A | 01 April 2020 |
| | | | | US | 11039165 | B2 | 15 June 2021 |
| | | | | US | 2021218985 | A1 | 15 July 2021 |
| | | | | WO | 2019234578 | A1 | 12 December 2019 |
| | | | | TW | 202019185 | A | 16 May 2020 |
| | | | | CN | 110572666 | B | 02 November 2021 |
| | | | | CN | 110572645 | B | 02 September 2022 |
| | | | | CN | 115334301 | A | 11 November 2022 |
| | | | | CN | 110572666 | A | 13 December 2019 |
| | | | | TW | 739113 | B1 | 11 September 2021 |
| | | | | TW | 736903 | B1 | 21 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022103418 W